# EUROPEAN PATENT APPLICATION

(11) **EP 4 492 721 A1**
(43) Date of publication of application: **15.01.2025**
(21) Application number: 23778340.2
(22) Date of filing: 30.03.2023
(51) Int. Cl.: H04L 5/00

(54) **COMMUNICATION METHOD AND APPARATUS**

(30) Priority: 02.04.2022 CN 202210351043
(71) Applicant: Huawei Technologies Co., Ltd., Shenzhen, Guangdong 518129 (CN)
(72) Inventor: FAN, Qiang, Shenzhen, Guangdong 518129 (CN)
(74) Representative: Isarpatent
(86) International application number: PCT/CN2023/084946
(87) International publication number: WO 2023/185975

(57) **Abstract**

This application provides a communication method and apparatus. The method includes: a configuring discontinuous reception DRX function based on DRX configuration information; receiving first indication information from a network device; and deactivating the DRX function based on the first indication information.

## Description

### TECHNICAL FIELD

This application relates to the field of communication technologies, and in particular, to a communication method and apparatus.

### BACKGROUND

In a wireless communication network, an extended reality (extended reality, XR) technology has advantages such as multiple angles of view and strong interaction, can provide brand-new visual experience for a user, and has great application value and business potential. XR includes technologies such as virtual reality (virtual reality, VR), augmented reality (augmented reality, AR), and mixed reality (mixed reality, MR), and can be widely applied to many fields such as entertainment, gaming, medical care, advertising, industry, online education, and engineering.

Although an immersive service provided by XR greatly improves user experience, there are very high requirements on network transmission. On the one hand, a higher network throughput rate is needed for transmission of a high-definition video. On the other hand, real-time performance of video streams and user interactive behavior impose higher requirements on a network transmission delay. For example, in a cloud VR service, after a user terminal initiates a request to a cloud VR server, the cloud server delivers a video frame based on the request. After the terminal receives data of the video frame, the terminal presents a VR picture to a user.

Cloud XR is a quasi-periodic video streaming service. A video frame rate determines a video frame generation interval. However, in an actual transmission system, an encoding delay of a video frame, a network transmission delay, and the like cause jitter (jitter) in time at which the video frame arrives at a base station side. As a result, a transmission resource does not match a service arrival moment. This not only causes a waste of resources, but also causes an increase in power consumption because the terminal performs unnecessary decoding and provides a hybrid automatic repeat request (hybrid automatic repeat request, HARQ) feedback. Therefore, how to avoid an increase in a service transmission delay and deterioration of service experience that are caused by jitter in time at which an XR downlink service arrives at a base station becomes an urgent problem to be resolved.

### SUMMARY

Embodiments of this application provide a reference signal transmission method and apparatus.

According to a first aspect, an embodiment of this application provides a communication method. The method may be performed by a terminal device, may be performed by a component (for example, a processor, a chip, or a chip system) of the terminal device, or may be implemented by a logical module or software that can implement all or some functions of the terminal device. The method includes: a configuring discontinuous reception DRX function based on DRX configuration information; receiving first indication information from a network device; and deactivating the DRX function based on the first indication information.

Optionally, the first indication information is carried in a MAC CE or L1 signaling. Optionally, when detecting that jitter occurs in time at which a downlink service data packet arrives at the network device, the network device may notify, by using the MAC CE or the L1 signaling carrying the first indication information, the terminal to deactivate or suspend the DRX function.

According to the method, problems that a service transmission delay increases and service experience deteriorates because a moment at which service data arrives at the network device does not match DRX activation time of the terminal on an air interface side can be avoided, thereby improving transmission efficiency.

With reference to the first aspect, in some implementations of the first aspect, the network device may have an architecture in which a CU and a DU are separated. That the network device detects that the jitter occurs in the time at which the downlink service data packet arrives at the network device may be that the CU detects the jitter, the CU indicates the DU to suspend the DRX function of the terminal, and then the DU notifies, by using the MAC CE or the L1 signaling, the terminal to suspend the DRX function. For example, the CU may include an information element DRX Temporary Cancellation in an F1AP UE CONTEXT MODIFICATION REQUEST message as the indication information. That the network device detects that the jitter occurs in the time at which the downlink service data packet arrives at the network device may alternatively be that the DU detects the jitter, and the DU notifies, by using the MAC CE or the L1 signaling carrying the first indication information, the terminal to suspend the DRX function.

Optionally, that the network device detects that the jitter in the time at which the downlink service data packet arrives at the network device disappears may be that the CU detects that the jitter disappears, the CU indicates the DU to resume the DRX function of the terminal, and then the DU notifies, by using the MAC CE or the L1 signaling, the terminal to resume the DRX function. For example, the CU may include an information element DRX Resumption in the F1AP UE CONTEXT MODIFICATION REQUEST message as the indication information. That the network device detects that the jitter in the time at which the downlink service data packet arrives at the network device disappears may alternatively be that the DU detects that the jitter disappears, and the DU notifies, by using the MAC CE or the L1 signaling carrying the first indication information, the terminal to resume the DRX function.

With reference to the first aspect, in some implementations of the first aspect, the first indication information includes cell indication information and bandwidth part BWP indication information. The cell indication information indicates one or more serving cells or one or more serving cell sets. The BWP indication information indicates one or more BWP indexes. The deactivating the DRX function based on the first indication information includes: deactivating the DRX function on a corresponding BWP in a serving cell or a cell set.

Optionally, cell indication information included in the first indication information may be an index (index) of one or more serving cells (serving cells). The index indicates the terminal to deactivate the DRX function in an indicated cell, that is, the terminal starts to continuously monitor PDCCH occasions (occasions) in the indicated cell. The cell indication information may alternatively be cell set information, for example, may be an index of one or more cell sets. Optionally, the CU may notify the DU or the terminal of one or more serving cell sets in advance. Each serving cell set is identified by using one index value, and includes at least one serving cell. After the CU detects that the jitter occurs in the downlink service data packet, the CU may indicate index values of the serving cell sets to the DU, to indicate to deactivate the DRX function of the terminal in serving cells included in the serving cell sets.

Optionally, the BWP indication information included in the first indication information may be one or more BWP indexes. The index indicates the terminal to deactivate the DRX function on an indicated BWP, that is, the terminal starts to continuously monitor PDCCH occasions on the indicated BWP, without distinguishing between a DRX activation time period and a DRX non-activation time period.

In this implementation, problems that a service transmission delay increases and service experience deteriorates because a moment at which service data arrives at the network device does not match DRX activation time of the terminal on an air interface side can be avoided, thereby improving transmission efficiency.

With reference to the first aspect, in some implementations of the first aspect, the first indication information includes bandwidth part BWP indication information in a cell; and the deactivating the DRX function based on the first indication information includes: deactivating the DRX function on a BWP in the cell. In this implementation, problems that a service transmission delay increases and service experience deteriorates because a moment at which service data arrives at the network device does not match DRX activation time of the terminal on an air interface side can be avoided, thereby improving transmission efficiency.

Optionally, the first indication information includes BWP indication information in a serving cell, and the BWP indication information may be a serving cell index and one or more BWP indexes. The BWP indication information in the serving cell indicates the terminal to deactivate the DRX function on a corresponding BWP in the serving cell, that is, the terminal starts to continuously monitor PDCCH occasions on an indicated BWP in the serving cell. In this implementation, problems that a service transmission delay increases and service experience deteriorates because a moment at which service data arrives at the network device does not match DRX activation time of the terminal on an air interface side can be avoided, thereby improving transmission efficiency.

With reference to the first aspect, in some implementations of the first aspect, the first indication information includes frequency band indication information, and the frequency band indication information indicates one or more communication frequency bands; and the deactivating the DRX function based on the first indication information includes: deactivating the DRX function on a communication frequency band indicated by the frequency band indication information.

Optionally, the frequency band indication information included in the first indication information may indicate an FR 1 (Frequency Range 1) frequency band, an FR 2 (Frequency Range 2) frequency band, an FR 2-1 (Frequency Range 2-1) frequency band, or an FR 2-2 (Frequency Range 2-2) frequency band. The frequency band indication information indicates the terminal to deactivate the DRX function on a corresponding frequency band. In this implementation, problems that a service transmission delay increases and service experience deteriorates because a moment at which service data arrives at the network device does not match DRX activation time of the terminal on an air interface side can be avoided, thereby improving transmission efficiency.

With reference to the first aspect, in some implementations of the first aspect, the first indication information includes duration indication information, and the duration indication information indicates duration of deactivating the DRX function; and the deactivating the DRX function based on the first indication information includes: deactivating the DRX function within the duration indicated by the duration indication information, and activating the DRX function beyond the duration indicated by the duration indication information.

Optionally, the duration indication information included in the first indication information may be time information in a unit of a DRX cycle, a millisecond, a radio frame, or the like. The time information indicates a time length in which subsequent jitter may exist, or indicates a time length in which the terminal deactivates the DRX function. Optionally, if the MAC CE/L1 signaling carrying the first indication information indicates only the duration indication information, after receiving the indication information, the terminal continuously monitors PDCCH occasions in all cells within an indicated duration range. Optionally, the duration indication information may not be explicitly carried in the MAC CE or the L1 signaling, but is preconfigured by the network device by using RRC configuration signaling. When receiving the MAC CE or the L1 signaling, the terminal is in a DRX active state within a duration range specified by using the RRC configuration signaling. If the sent MAC CE/L1 signaling indicates the duration indication information, or the duration indication information is preconfigured in the RRC signaling, and the MAC CE/L1 signaling indicates at least one of the foregoing described cell indication information, BWP indication information, LCID information, DRB information, frequency band indication information, or DRX information, the terminal continuously monitors PDCCH occasions within the duration range indicated by the MAC CE/L1 signaling or the RRC configuration signaling in a corresponding cell or cell set or a serving cell associated with a BWP or an LCID or a serving cell associated with a frequency band or a DRX group. After the specified duration ends, the terminal automatically activates or resumes the DRX function. In this case, the network device depends on that the terminal automatically activates or resumes a DRX operation, and a subsequent part does not need to be performed. In this implementation, problems that a service transmission delay increases and service experience deteriorates because a moment at which service data arrives at the network device does not match DRX activation time of the terminal on an air interface side can be avoided, thereby improving transmission efficiency.

With reference to the first aspect, in some implementations of the first aspect, the method further includes: receiving second indication information from the network device; and activating the DRX function based on the second indication information.

Optionally, the second indication information is carried in a MAC CE or L1 signaling. Optionally, when detecting that the jitter in the time at which the downlink service data packet arrives at the network device disappears, the network device may notify, by using the MAC CE or the L1 signaling carrying the second indication information, the terminal to activate or resume the DRX function.

According to the method, the terminal can better perform DRX configuration based on jitter information of the downlink service data packet, to improve resource utilization efficiency and service experience of the terminal.

With reference to the first aspect, in some implementations of the first aspect, the second indication information includes cell indication information and bandwidth part BWP indication information. The cell indication information indicates one or more serving cells or one or more serving cell sets. The BWP indication information indicates one or more BWP indexes. The activating the DRX function based on the second indication information includes: activating the DRX function on a corresponding BWP in a serving cell or a cell set.

Optionally, the cell indication information included in the second indication information may be an index of one or more serving cells. The index indicates the terminal to resume the DRX function in an indicated cell, that is, the terminal continues to monitor PDCCH occasions only within a DRX activation time period in the indicated cell, and does not monitor PDCCH occasions within a DRX non-activation time period. The cell indication information may alternatively be serving cell set information, for example, may be an index of one or more serving cell sets, to indicate the terminal to activate the DRX function in serving cells included in the serving cell sets.

Optionally, the BWP indication information included in the second indication information may be one or more BWP indexes. The index indicates the terminal to activate the DRX function on an indicated BWP, that is, the terminal monitors PDCCH occasions only within a DRX activation time period on the indicated BWP.

In this implementation, the terminal can better perform DRX configuration based on jitter information of the downlink service data packet, to improve resource utilization efficiency and service experience of the terminal.

With reference to the first aspect, in some implementations of the first aspect, the second indication information includes bandwidth part BWP indication information in a cell; and the activating the DRX function based on the second indication information includes: activating the DRX function on a BWP in the cell.

Optionally, the second indication information includes BWP indication information in a serving cell, and the BWP indication information may be a serving cell index and one or more BWP indexes. The BWP indication information in the serving cell indicates the terminal to activate the DRX function on an indicated BWP in the cell, that is, the terminal monitors PDCCH occasions only within a DRX activation time period on the indicated BWP in the cell. In this implementation, the terminal can better perform DRX configuration based on jitter information of the downlink service data packet, to improve resource utilization efficiency and service experience of the terminal.

With reference to the first aspect, in some implementations of the first aspect, the second indication information includes frequency band indication information, and the frequency band indication information indicates one or more communication frequency bands; and the activating the DRX function based on the second indication information includes: activating the DRX function on a communication frequency band indicated by the frequency band indication information.

Optionally, the frequency band indication information included in the second indication information may indicate an FR 1 frequency band, an FR 2 frequency band, an FR 2-1 frequency band, or an FR 2-2 frequency band. The frequency band indication information indicates the terminal to activate the DRX function on a corresponding frequency band. In this implementation, the terminal can better perform DRX configuration based on jitter information of the downlink service data packet, to improve resource utilization efficiency and service experience of the terminal.

According to a second aspect, an embodiment of this application provides a communication method. The method may be performed by a radio access network device, may be performed by a component (for example, a processor, a chip, or a chip system) of the radio access network device, or may be implemented by a logical module or software that can implement all or some functions of the radio access network device. The method includes: sending discontinuous reception DRX configuration information to a terminal; and sending first indication information to the terminal, where the first indication information indicates to deactivate a DRX function.

Optionally, the first indication information is carried in a MAC CE or L1 signaling. Optionally, when detecting that jitter occurs in time at which a downlink service data packet arrives at the network device, the network device may notify, by using the MAC CE or the L1 signaling carrying the first indication information, the terminal to deactivate or suspend the DRX function.

According to the method, problems that a service transmission delay increases and service experience deteriorates because a moment at which service data arrives at the network device does not match DRX activation time of the terminal on an air interface side can be avoided, thereby improving transmission efficiency.

With reference to the second aspect, in some implementations of the second aspect, the network device may have an architecture in which a CU and a DU are separated. That the network device detects that the jitter occurs in the time at which the downlink service data packet arrives at the network device may be that the CU detects the jitter, the CU indicates the DU to suspend the DRX function of the terminal, and then the DU notifies, by using the MAC CE or the L1 signaling, the terminal to suspend the DRX function. For example, the CU may include an information element DRX Temporary Cancellation in an F1AP UE CONTEXT MODIFICATION REQUEST message as the indication information. That the network device detects that the jitter occurs in the time at which the downlink service data packet arrives at the network device may alternatively be that the DU detects the jitter, and the DU notifies, by using the MAC CE or the L1 signaling carrying the first indication information, the terminal to suspend the DRX function.

Optionally, that the network device detects that the jitter in the time at which the downlink service data packet arrives at the network device disappears may be that the CU detects that the jitter disappears, the CU indicates the DU to resume the DRX function of the terminal, and then the DU notifies, by using the MAC CE or the L1 signaling, the terminal to resume the DRX function. For example, the CU may include an information element DRX Resumption in the F1AP UE CONTEXT MODIFICATION REQUEST message as the indication information. That the network device detects that the jitter in the time at which the downlink service data packet arrives at the network device disappears may alternatively be that the DU detects that the jitter disappears, and the DU notifies, by using the MAC CE or the L1 signaling carrying the first indication information, the terminal to resume the DRX function.

With reference to the second aspect, in some implementations of the second aspect, the first indication information includes cell indication information and bandwidth part BWP indication information. The cell indication information indicates one or more serving cells or one or more serving cell sets. The BWP indication information indicates one or more BWP indexes.

Optionally, cell indication information included in the first indication information may be an index (index) of one or more serving cells (serving cells). The index indicates the terminal to deactivate the DRX function in an indicated cell, that is, the terminal starts to continuously monitor PDCCH occasions (occasions) in the indicated cell. The cell indication information may alternatively be cell set information, for example, may be an index of one or more cell sets. Optionally, the CU may notify the DU or the terminal of one or more serving cell sets in advance. Each serving cell set is identified by using one index value, and includes at least one serving cell. After the CU detects that the jitter occurs in the downlink service data packet, the CU may indicate index values of the serving cell sets to the DU, to indicate to deactivate the DRX function of the terminal in serving cells included in the serving cell sets.

Optionally, the BWP indication information included in the first indication information may be one or more BWP indexes. The index indicates the terminal to deactivate the DRX function on an indicated BWP, that is, the terminal starts to continuously monitor PDCCH occasions on the indicated BWP, without distinguishing between a DRX activation time period and a DRX non-activation time period.

In this implementation, problems that a service transmission delay increases and service experience deteriorates because a moment at which service data arrives at the network device does not match DRX activation time of the terminal on an air interface side can be avoided, thereby improving transmission efficiency.

With reference to the second aspect, in some implementations of the second aspect, the first indication information includes bandwidth part BWP indication information in a cell; and the BWP indication information in the cell indicates one or more BWP indexes.

Optionally, the first indication information includes BWP indication information in a serving cell, and the BWP indication information may be a serving cell index and one or more BWP indexes. The BWP indication information in the serving cell indicates the terminal to deactivate the DRX function on a corresponding BWP in the serving cell, that is, the terminal starts to continuously monitor PDCCH occasions on an indicated BWP in the serving cell. In this implementation, problems that a service transmission delay increases and service experience deteriorates because a moment at which service data arrives at the network device does not match DRX activation time of the terminal on an air interface side can be avoided, thereby improving transmission efficiency.

With reference to the second aspect, in some implementations of the second aspect, the first indication information includes frequency band indication information, and the frequency band indication information indicates one or more communication frequency bands.

Optionally, the frequency band indication information included in the first indication information may indicate an FR 1 frequency band, an FR 2 frequency band, an FR 2-1 frequency band, or an FR 2-2 frequency band. The frequency band indication information indicates the terminal to deactivate the DRX function on a corresponding frequency band. In this implementation, the terminal can better perform DRX configuration based on jitter information of the downlink service data packet, to improve resource utilization efficiency and service experience of the terminal.

With reference to the second aspect, in some implementations of the second aspect, the first indication information includes duration indication information, and the duration indication information indicates duration of deactivating the DRX function.

Optionally, the duration indication information included in the first indication information may be time information in a unit of a DRX cycle, a millisecond, a radio frame, or the like. The time information indicates a time length in which subsequent jitter may exist, or indicates a time length in which the terminal deactivates the DRX function. Optionally, if the MAC CE/L1 signaling carrying the first indication information indicates only the duration indication information, after receiving the indication information, the terminal continuously monitors PDCCH occasions in all cells within an indicated duration range. Optionally, the duration indication information may not be explicitly carried in the MAC CE or the L1 signaling, but is preconfigured by the network device by using RRC configuration signaling. When receiving the MAC CE or the L1 signaling, the terminal is in a DRX active state within a duration range specified by using the RRC configuration signaling. If the sent MAC CE/L1 signaling indicates the duration indication information, or the duration indication information is preconfigured in the RRC signaling, and the MAC CE/L1 signaling indicates at least one of the foregoing described cell indication information, BWP indication information, LCID information, DRB information, frequency band indication information, or DRX information, the terminal continuously monitors PDCCH occasions within the duration range indicated by the MAC CE/L1 signaling or the RRC configuration signaling in a corresponding cell or cell set or a serving cell associated with a BWP or an LCID or a serving cell associated with a frequency band or a DRX group. After the specified duration ends, the terminal automatically activates or resumes the DRX function. In this case, the network device depends on that the terminal automatically activates or resumes a DRX operation, and a subsequent part does not need to be performed. In this implementation, problems that a service transmission delay increases and service experience deteriorates because a moment at which service data arrives at the network device does not match DRX activation time of the terminal on an air interface side can be avoided, thereby improving transmission efficiency.

With reference to the second aspect, in some implementations of the second aspect, the method further includes: sending second indication information to the terminal, where the second indication information indicates to activate the DRX function.

Optionally, the second indication information is carried in a MAC CE or L1 signaling. Optionally, when detecting that the jitter in the time at which the downlink service data packet arrives at the network device disappears, the network device may notify, by using the MAC CE or the L1 signaling carrying the second indication information, the terminal to activate or resume the DRX function.

According to the method, the terminal can better perform DRX configuration based on jitter information of the downlink service data packet, to improve resource utilization efficiency and service experience of the terminal.

With reference to the second aspect, in some implementations of the second aspect, the second indication information includes cell indication information and bandwidth part BWP indication information. The cell indication information indicates one or more serving cells or one or more serving cell sets. The BWP indication information indicates one or more BWP indexes.

Optionally, the cell indication information included in the second indication information may be an index of one or more serving cells. The index indicates the terminal to resume the DRX function in an indicated cell, that is, the terminal continues to monitor PDCCH occasions only within a DRX activation time period in the indicated cell, and does not monitor PDCCH occasions within a DRX non-activation time period. The cell indication information may alternatively be serving cell set information, for example, may be an index of one or more serving cell sets, to indicate the terminal to activate the DRX function in serving cells included in the serving cell sets.

Optionally, the BWP indication information included in the second indication information may be one or more BWP indexes. The index indicates the terminal to activate the DRX function on an indicated BWP, that is, the terminal monitors PDCCH occasions only within a DRX activation time period on the indicated BWP.

In this implementation, the terminal can better perform DRX configuration based on jitter information of the downlink service data packet, to improve resource utilization efficiency and service experience of the terminal.

With reference to the second aspect, in some implementations of the second aspect, the second indication information includes bandwidth part BWP indication information in a cell; and the BWP indication information in the cell indicates one or more BWP indexes.

Optionally, the second indication information includes BWP indication information in a serving cell, and the BWP indication information may be a serving cell index and one or more BWP indexes. The BWP indication information in the serving cell indicates the terminal to activate the DRX function on a corresponding BWP in the serving cell, that is, the terminal starts to continuously monitor PDCCH occasions on an indicated BWP in the serving cell. In this implementation, problems that a service transmission delay increases and service experience deteriorates because a moment at which service data arrives at the network device does not match DRX activation time of the terminal on an air interface side can be avoided, thereby improving transmission efficiency.

With reference to the second aspect, in some implementations of the second aspect, the second indication information includes frequency band indication information. The frequency band indication information indicates one or more communication frequency bands.

Optionally, the frequency band indication information included in the second indication information may indicate an FR 1 frequency band, an FR 2 frequency band, an FR 2-1 frequency band, or an FR 2-2 frequency band. The frequency band indication information indicates the terminal to activate the DRX function on a corresponding frequency band. In this implementation, the terminal can better perform DRX configuration based on jitter information of the downlink service data packet, to improve resource utilization efficiency and service experience of the terminal.

With reference to the second aspect, in some implementations of the second aspect, the network device includes a CU and a DU, and the sending first indication information to the terminal includes: The CU transfers content of the first indication information to the DU, and the DU sends the first indication information to the terminal. In this implementation, the terminal can better perform DRX configuration based on jitter information of the downlink service data packet, to improve resource utilization efficiency and service experience of the terminal.

With reference to the second aspect, in some implementations of the second aspect, the network device includes a CU and a DU, and the sending second indication information to the terminal includes: The CU transfers content of the second indication information to the DU, and the DU sends the second indication information to the terminal. In this implementation, the terminal can better perform DRX configuration based on jitter information of the downlink service data packet, to improve resource utilization efficiency and service experience of the terminal.

According to a third aspect, an embodiment of this application provides a communication method. The method may be performed by a terminal device, may be performed by a component (for example, a processor, a chip, or a chip system) of the terminal device, or may be implemented by a logical module or software that can implement all or some functions of the terminal device. The method includes: receiving service data based on semi-persistent scheduling SPS configuration information; receiving first indication information from a network device; and deactivating an SPS configuration or suspending SPS reception based on the first indication information.

Optionally, the first indication information is carried in a MAC CE or L1 signaling. Optionally, when detecting that jitter occurs in time at which a downlink service data packet arrives at the network device, the network device may notify, by using the MAC CE or the L1 signaling carrying the first indication information, a terminal to deactivate the SPS configuration or suspend the SPS reception.

According to the method, problems that SPS resources are wasted because a moment at which service data arrives at the network device does not match an SPS transmission resource on an air interface side, and power consumption increases because the terminal performs unnecessary SPS detection, provides a HARQ feedback, and so on can be avoided, thereby improving transmission efficiency.

With reference to the third aspect, in some implementations of the third aspect, the network device may have an architecture in which a CU and a DU are separated. That the network device detects that the jitter occurs in the time at which the downlink service data packet arrives at the network device may be that the CU detects the jitter, the CU indicates the DU to notify the terminal to deactivate the SPS configuration or suspend the SPS reception, and then the DU notifies, by using the MAC CE or the L1 signaling, the terminal to deactivate the SPS configuration or suspend the SPS reception. For example, the CU may include an information element SPS Temporary Cancellation in an F1AP UE CONTEXT MODIFICATION REQUEST message as the indication information. That the network device detects that the jitter occurs in the time at which the downlink service data packet arrives at the network device may alternatively be that the DU detects the jitter, and the DU notifies, by using the MAC CE or the L1 signaling carrying the first indication information, the terminal to deactivate the SPS configuration or suspend the SPS reception.

Optionally, that the network device detects that the jitter in the time at which the downlink service data packet arrives at the network device disappears may be that the CU detects that the jitter disappears, the CU indicates the DU to resume the SPS reception of the terminal or indicates that the jitter of the downlink service data packet has disappeared, and then the DU notifies, by using the MAC CE or the L1 signaling, the terminal to resume the SPS reception or that the jitter of the downlink service data packet has disappeared. For example, the CU may include an information element SPS Resumption in the F1AP UE CONTEXT MODIFICATION REQUEST message as the indication information. That the network device detects that the jitter in the time at which the downlink service data packet arrives at the network device disappears may alternatively be that the DU detects that the jitter disappears, and the DU notifies, by using the MAC CE or the L1 signaling carrying the first indication information, the terminal to resume the SPS reception or that the jitter of the downlink service data packet has disappeared.

Optionally, the first indication information includes SPS information. For example, the SPS information may be one or more SPS indexes. The one or more SPS indexes indicate to deactivate SPS configurations.

Optionally, the first indication information includes cell indication information. For example, the cell indication information may be an index (index) of one or more serving cells (serving cells). The index indicates to temporarily deactivate SPS configurations in the cells.

Optionally, the first indication information includes SPS configuration set information. For example, the SPS configuration set information may be an index of one or more SPS configuration sets. Optionally, the CU may notify the DU or the terminal of some SPS configuration sets in advance. Each SPS configuration set is identified by using one index value, and includes at least one SPS configuration. After the CU detects that the jitter occurs in the downlink service data packet, the CU may indicate index values of the SPS configuration sets to the DU, to indicate the DU to deactivate SPS configurations included in the SPS configuration sets.

Optionally, the first indication information includes duration indication information. For example, the duration indication information may be time information in a unit of a DRX cycle, a millisecond, a slot, a radio frame, an SPS periodicity, or the like. The time information indicates a time length in which subsequent jitter may exist, or indicates a time length in which the SPS reception of the terminal is suspended. According to the method, problems that SPS resources are wasted because a moment at which service data arrives at the network device does not match an SPS transmission resource on an air interface side, and power consumption increases because the terminal performs unnecessary SPS detection, provides a HARQ feedback, and so on can be avoided, thereby improving transmission efficiency.

With reference to the third aspect, in some implementations of the third aspect, the method further includes: receiving second indication information from the network device; and resuming the SPS reception of the terminal based on the second indication information.

Optionally, the second indication information includes SPS information. For example, the SPS information may be one or more SPS indexes. The one or more SPS indexes indicate to activate SPS configurations.

Optionally, the second indication information includes cell indication information. For example, the cell indication information may be an index (index) of one or more serving cells (serving cells). The index indicates to activate SPS configurations in the cells.

Optionally, the second indication information includes SPS configuration set information. For example, the SPS configuration set information may be an index of one or more SPS configuration sets. The index indicates to activate SPS configurations included in the SPS configuration sets.

According to a fourth aspect, an embodiment of this application provides a communication method. The method may be performed by a radio access network device, may be performed by a component (for example, a processor, a chip, or a chip system) of the radio access network device, or may be implemented by a logical module or software that can implement all or some functions of the radio access network device. The method includes: sending semi-persistent scheduling SPS configuration information to a terminal; and sending first indication information to the terminal, where the first indication information indicates to deactivate an SPS configuration or suspend SPS reception.

Optionally, the first indication information is carried in a MAC CE or L1 signaling. Optionally, when detecting that jitter occurs in time at which a downlink service data packet arrives at the network device, the network device may notify, by using the MAC CE or the L1 signaling carrying the first indication information, a terminal to deactivate the SPS configuration or suspend the SPS reception.

According to the method, problems that SPS resources are wasted because a moment at which service data arrives at the network device does not match an SPS transmission resource on an air interface side, and power consumption increases because the terminal performs unnecessary SPS detection, provides a HARQ feedback, and so on can be avoided, thereby improving transmission efficiency.

With reference to the fourth aspect, in some implementations of the fourth aspect, the network device may have an architecture in which a CU and a DU are separated. That the network device detects that the jitter occurs in the time at which the downlink service data packet arrives at the network device may be that the CU detects the jitter, the CU indicates the DU to notify the terminal to deactivate the SPS configuration or suspend the SPS reception, and then the DU notifies, by using the MAC CE or the L1 signaling, the terminal to deactivate the SPS configuration or suspend the SPS reception. For example, the CU may include an information element SPS Temporary Cancellation in an F1AP UE CONTEXT MODIFICATION REQUEST message as the indication information. That the network device detects that the jitter occurs in the time at which the downlink service data packet arrives at the network device may alternatively be that the DU detects the jitter, and the DU notifies, by using the MAC CE or the L1 signaling carrying the first indication information, the terminal to deactivate the SPS configuration or suspend the SPS reception.

Optionally, that the network device detects that the jitter in the time at which the downlink service data packet arrives at the network device disappears may be that the CU detects that the jitter disappears, the CU indicates the DU to resume the SPS reception of the terminal or indicates that the jitter of the downlink service data packet has disappeared, and then the DU notifies, by using the MAC CE or the L1 signaling, the terminal to resume the SPS reception or that the jitter of the downlink service data packet has disappeared. For example, the CU may include an information element SPS Resumption in the F1AP UE CONTEXT MODIFICATION REQUEST message as the indication information. That the network device detects that the jitter in the time at which the downlink service data packet arrives at the network device disappears may alternatively be that the DU detects that the jitter disappears, and the DU notifies, by using the MAC CE or the L1 signaling carrying the first indication information, the terminal to resume the SPS reception or that the jitter of the downlink service data packet has disappeared.

Optionally, content of the first indication information is the same as that in the third aspect, and details are not described herein again.

With reference to the fourth aspect, in some implementations of the fourth aspect, the method further includes: sending second indication information to the terminal, where the second indication information indicates the terminal to resume the SPS reception or that the jitter of the downlink service data packet has disappeared.

According to the method, the terminal can better perform SPS configuration based on jitter information of the downlink service data packet, to improve resource utilization efficiency and service experience of the terminal.

Optionally, content of the second indication information is the same as that in the third aspect, and details are not described herein again.

According to a fifth aspect, an embodiment of this application provides an apparatus. The apparatus may implement the method according to any one of the first aspect or the third aspect or the possible implementations of the first aspect or the third aspect. The apparatus includes corresponding units or components configured to perform the foregoing method. The units included in the apparatus may be implemented by using software and/or hardware. The apparatus may be, for example, a terminal or a network device, or may be a chip, a chip system, a processor, or the like that supports the terminal or the network device in implementing the foregoing method.

According to a sixth aspect, an embodiment of this application provides an apparatus. The apparatus may implement the method according to any one of the second aspect or the fourth aspect or the possible implementations of the second aspect or the fourth aspect. The apparatus includes corresponding units or components configured to perform the foregoing method. The units included in the apparatus may be implemented by using software and/or hardware. The apparatus may be, for example, a terminal or a network device, or may be a chip, a chip system, a processor, or the like that supports the terminal or the network device in implementing the foregoing method.

According to a seventh aspect, an embodiment of this application provides an apparatus, including: a processor. The processor is coupled to a memory, the memory is configured to store a program or instructions, and when the program or the instructions are executed by the processor, the apparatus is enabled to implement the method according to any one of the first aspect or the third aspect or the possible implementations of the first aspect or the third aspect.

According to an eighth aspect, an embodiment of this application provides an apparatus, including: a processor. The processor is coupled to a memory, the memory is configured to store a program or instructions, and when the program or the instructions are executed by the processor, the apparatus is enabled to implement the method according to any one of the second aspect or the fourth aspect or the possible implementations of the second aspect or the fourth aspect.

According to a ninth aspect, an embodiment of this application provides a computer-readable storage medium. The computer-readable storage medium stores a computer program or instructions, and when the computer program or the instructions are executed, a computer is enabled to perform the method according to any one of the first aspect or the third aspect or the possible implementations of the first aspect or the third aspect.

According to a tenth aspect, an embodiment of this application provides a computer-readable storage medium. The computer-readable storage medium stores a computer program or instructions, and when the computer program or the instructions are executed, a computer is enabled to perform the method according to any one of the second aspect or the fourth aspect or the possible implementations of the second aspect or the fourth aspect.

According to an eleventh aspect, an embodiment of this application provides a computer program product. The computer program product includes computer program code, and when the computer program code runs on a computer, the computer is enabled to perform the method according to any one of the first aspect or the third aspect or the possible implementations of the first aspect or the third aspect.

According to a twelfth aspect, an embodiment of this application provides a computer program product. The computer program product includes computer program code, and when the computer program code runs on a computer, the computer is enabled to perform the method according to any one of the second aspect or the fourth aspect or the possible implementations of the second aspect or the fourth aspect.

According to a thirteenth aspect, an embodiment of this application provides a chip, including: a processor. The processor is coupled to a memory, the memory is configured to store a program or instructions, and when the program or the instructions are executed by the processor, the chip is enabled to implement the method according to any one of the first aspect or the third aspect or the possible implementations of the first aspect or the third aspect.

According to a fourteenth aspect, an embodiment of this application provides a chip, including: a processor. The processor is coupled to a memory, the memory is configured to store a program or instructions, and when the program or the instructions are executed by the processor, the chip is enabled to implement the method according to any one of the second aspect or the fourth aspect or the possible implementations of the second aspect or the fourth aspect.

According to a fifteenth aspect, an embodiment of this application provides a communication system, including the apparatus according to the fifth aspect and the apparatus according to the sixth aspect.

According to a sixteenth aspect, an embodiment of this application provides a communication system, including the apparatus according to the seventh aspect and the apparatus according to the eighth aspect.

It may be understood that, for beneficial effects of the features corresponding to the fifth aspect to the sixteenth aspect and the first aspect to the fourth aspect, refer to related descriptions in the first aspect to the fourth aspect. Details are not described again.

### BRIEF DESCRIPTION OF DRAWINGS

FIG. 1 is a diagram of a communication system to which an embodiment of this application is applicable;
FIG. 2 is a diagram of an example of an architecture of a communication system;
FIG. 3 is a diagram of transmission of a data packet in a video frame;
FIG. 4 to FIG. 6 are diagrams of several system frameworks to which embodiments of this application are applicable;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic flowchart of a communication method according to an embodiment of this application;
FIG. 13 is a schematic flowchart of a communication method according to an embodiment of this application;
FIG. 14 is a diagram of a structure of a communication apparatus according to an embodiment of this application;
FIG. 15 is a diagram of a structure of a terminal according to an embodiment of this application; and
FIG. 16 is a diagram of another communication apparatus according to an embodiment of this application.

### DESCRIPTION OF EMBODIMENTS

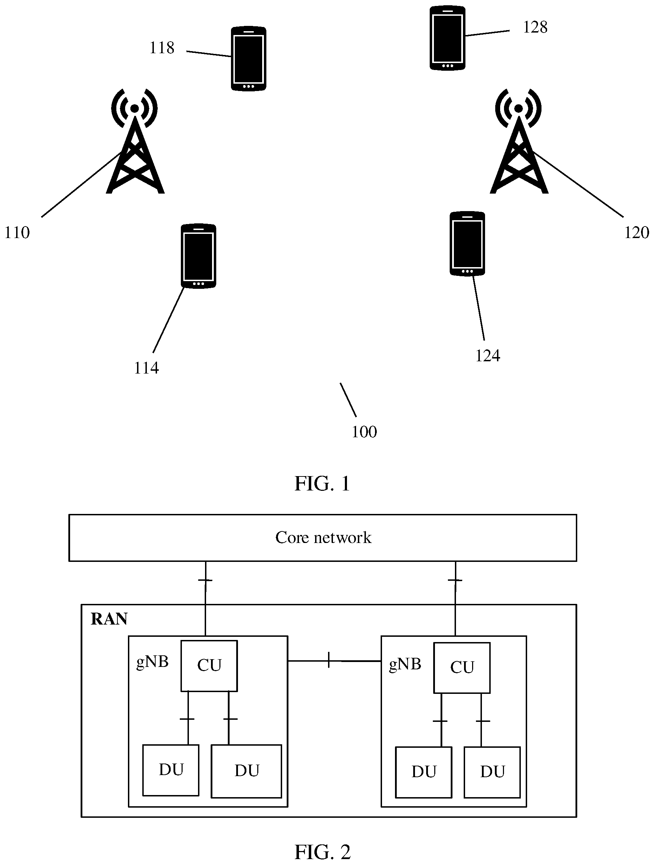

A method and an apparatus provided in embodiments of this application may be applied to a communication system. FIG. 1 is a diagram of a structure of a communication system. The communication system 100 includes one or more network devices (a network device 110 and a network device 120 shown in the figure), and one or more terminals that communicate with the one or more network devices. A terminal 114 and a terminal 118 shown in FIG. 1 communicate with the network device 110, and a terminal 124 and a terminal 128 shown in FIG. 1 communicate with the network device 120. It may be understood that the network device and the terminal may also be referred to as communication devices.

Technologies described in embodiments of the present invention may be applied to various communication systems, for example, a 4th generation (4th generation, 4G) communication system, a 4.5G communication system, a 5G communication system, a system converged by a plurality of communication systems, and a future evolved communication system (for example, a 6G communication system). For example, the communication system may be a long term evolution (long term evolution, LTE) system, a new radio (new radio, NR) system, a wireless fidelity (wireless fidelity, Wi-Fi) system, a wireless self-organizing system, a device-to-device direct communication system, a communication system related to the 3rd generation partnership project (3rd generation partnership project, 3GPP), and another communication system of this type.

FIG. 2 is a diagram of an example of a possible architecture of a communication system. As shown in FIG. 2, a network device in a radio access network (radio access network, RAN) includes a base station (for example, a gNodeB or a gNB) that has an architecture in which a central unit (central unit, CU) and a distributed unit (distributed unit, DU) are separated. The RAN may be connected to a core network (where for example, the core network may be an LTE core network or a 5G core network). It may be understood that the base station is divided into the CU and the DU from the perspective of a logical function. The CU and the DU may be physically separated or deployed together. A plurality of DUs may share one CU. One DU may alternatively be connected to a plurality of CUs (not shown). The CU and the DU may be connected through an interface, for example, an F1 interface. The CU and the DU may be divided based on a protocol layer of a wireless network. For example, functions of a packet data convergence protocol (packet data convergence protocol, PDCP) layer and a radio resource control (radio resource control, RRC) layer are set on the CU, but functions of a radio link control (radio link control, RLC) layer, a media access control (media access control, MAC) layer, and a physical (physical) layer are set on the DU. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are set on the CU, and remaining functions of the RLC layer and functions of protocol layers below the RLC layer are set on the DU. In another design, functions of the CU or the DU may alternatively be obtained through division based on a service type or another system requirement. For example, division is performed based on a delay, a function whose processing time needs to satisfy a delay requirement is set on the DU, and a function whose processing time does not need to satisfy the delay requirement is set on the CU. A network architecture shown in FIG. 2 may be applied to a 5G communication system, or may share one or more components or resources with an LTE system. In another design, the CU may alternatively have one or more functions of the core network. One or more CUs may be disposed in a centralized manner or disposed separately. For example, the CUs may be disposed on a network side for ease of centralized management. The DU may have a plurality of radio frequency functions, or the radio frequency functions may be set remotely.

The function of the CU may be implemented by one entity, or a control plane (CP) and a user plane (UP) may be further separated. To be specific, the control plane of the CU (CU-CP) and the user plane of the CU (CU-UP) may be implemented by different function entities, and the CU-CP and the CU-UP may be coupled to the DU to jointly implement a function of a base station.

It may be understood that embodiments provided in this application are also applicable to an architecture in which the CU and the DU are not separated.

In this application, the network device may be any device having a wireless transceiver function. The network device includes but is not limited to: an evolved NodeB (NodeB, eNB, or e-NodeB, evolved NodeB) in LTE, a gNodeB (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, a core network device, or the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a server (for example, a cloud server), a radio controller in a cloud radio access network (cloud radio access network, CRAN) scenario, a CU, and/or a DU. The network device may alternatively be a server, a wearable device, a machine type communication device, a vehicle-mounted device, a smart screen, or the like. The following uses an example in which the network device is a base station for description. A plurality of network devices may be base stations of a same type, or may be base stations of different types. The base station may communicate with a terminal device, or may communicate with a terminal device through a relay station. The terminal device may communicate with a plurality of base stations using different technologies. For example, the terminal device may communicate with a base station supporting an LTE network, or may communicate with a base station supporting a 5G network, or may support dual connections to a base station in an LTE network and a base station in a 5G network. It may be understood that all or some functions of the network device in this application may alternatively be implemented by using a software function running on hardware, or may be implemented by using an instantiated virtualization function on a platform (for example, a cloud platform).

The terminal is a device having a wireless transceiver function. The terminal may be deployed on land, including an indoor device or an outdoor device, or may be hand-held, wearable, or vehicle-mounted; may be deployed on a water surface (for example, on a ship); or may be deployed in the air (for example, on an airplane, a balloon, or a satellite). The terminal may be a mobile phone (mobile phone), a tablet computer (Pad), a computer having a wireless transceiver function, a VR terminal device, an AR terminal device, an MR terminal device, a terminal in industrial control (industrial control), a vehicle-mounted terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application. The terminal sometimes may also be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a wireless communication device, a machine terminal, a UE agent, a UE apparatus, or the like. The terminal may be fixed or mobile.

By way of example but not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that focus on only one type of application function and need to be used together with other devices such as smartphones, such as various smart bands or smart jewelry for monitoring physical signs.

In this application, the terminal may be a terminal in an internet of things (internet of things, IoT) system. An IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application. Therefore, embodiments of this application may be applied to an internet of vehicles, for example, vehicle-to-everything (vehicle-to-everything, V2X), long term evolution-vehicle (long term evolution vehicle, LTE-V), and vehicle-to-vehicle (vehicle-to-vehicle, V2V).

Alternatively, the terminal in this application may be a VR terminal, an AR terminal, or an MR terminal. The VR terminal, the AR terminal, and the MR terminal each may be referred to as an XR terminal. For example, the XR terminal may be a head-mounted device (for example, a helmet or glasses), may be an all-in-one machine, or may be a television, a display, a car, a vehicle-mounted device, a tablet computer, a smart screen, or the like. The XR terminal can present XR data to a user, and the user can experience diversified XR services by wearing or using the XR terminal. The XR terminal may access a network in a wireless or wired manner, for example, access a network through a Wi-Fi or 5G system.

A VR technology mainly refers to rendering of visual and audio scenarios to simulate sensory stimulation of vision and audio in a real world to a user as much as possible. In the VR technology, the user may wear an XR terminal (for example, a head-mounted device) to simulate a visual sense and/or an auditory sense to the user. The VR technology may further perform action tracking on the user, to update simulated visual and/or auditory content in time. An AR technology is mainly to provide additional visual and/or auditory information or manually generated content in a real environment perceived by the user. The user may directly (where for example, sensing, processing, and rendering are not performed) or indirectly (where for example, transferring is performed through a sensor or the like) perceive the real environment, and further enhancement processing is performed. An MR technology is to insert some virtual elements into a physical scenario, to provide immersive experience for the user by providing these elements as a part of a real scenario. The network device may process and perform transmission of data (which may be referred to as XR data) generated by an XR service. For example, a network device in a cloud may render and encode (for example, perform source encoding on) XR source data, and perform transmission of XR data to an XR terminal through a network device in a core network and/or an access network. The XR terminal provides diversified XR experience (for example, immersive experience, visual experience, interaction experience, or device experience) for the user by processing the XR data. The XR experience may be evaluated from a plurality of different dimensions, for example, including one or more of the following dimensions: image definition, image smoothness, image distortion, image stereoscopy, image black borders, image smearing, sound quality, a sound effect, an angle of view, freezing, artifacts, dizziness, audio and video synchronization, interaction freedom, an interaction operation response speed, interaction operation precision, an interaction content loading speed, terminal wearing comfort, terminal wearing fatigue, terminal battery life, terminal portability, terminal visual impairment friendliness, or the like.

For transmission of a video service such as XR, a picture frame or a picture frame slice or segment may be sent to a terminal in a form of a data packet. For example, the picture frame or the picture frame slice or segment is encapsulated into an internet protocol (internet protocol, IP) packet at a network transport layer and transmitted to a fixed network/core network, and then the IP data packet is transmitted to the terminal through a wireless air interface. It may be understood that the picture frame in this application may also be referred to as a video frame or a data frame.

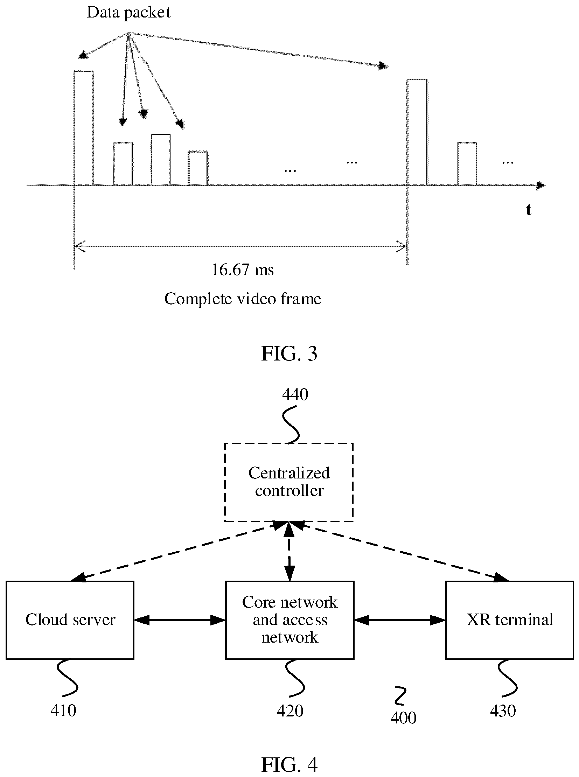

Although an immersive service provided by XR greatly improves user experience, there are very high requirements on network transmission. On the one hand, a higher network throughput rate is needed for transmission of a high-definition video. On the other hand, real-time performance of video streams and user interactive behavior impose higher requirements on a network transmission delay. For example, in a cloud VR service, after a user terminal initiates a request to a cloud VR server, the cloud server delivers a video frame based on the request. After the terminal receives data of the video frame, the terminal presents a VR picture to a user. Cloud XR is a quasi-periodic video streaming service. A video frame rate determines a video frame generation interval. For example, when a frame rate (frame per second, FPS) is 60 Hz, in an ideal situation, the server generates a video frame every 1/60=16.67 ms for network transmission and finally delivers the video frame to the user. Because each video frame generated by the server is usually large, each video frame is divided into several data packets for transmission and scheduling in a network, as shown in FIG. 3. In addition, in an actual transmission system, an encoding delay of a data frame, a network transmission delay, and the like cause jitter (jitter) in time at which the data frame arrives at a base station side. Generally, it may be considered that the jitter complies with a truncated Gaussian distribution, and a truncated range is approximately [-4 ms, 4 ms].

The following describes the technical solutions of this application in detail by using specific embodiments with reference to the accompanying drawings. The following embodiments and implementations may be combined with each other, and same or similar concepts or processes may not be described again in some embodiments. It should be understood that a function explained in this application may be implemented by using an independent hardware circuit, software running in combination with a processor/microprocessor or a general purpose computer, an application-specific integrated circuit, and/or one or more digital signal processors. When described as a method, this application may alternatively be implemented in a computer processor and a memory coupled to the processor.

For ease of understanding of embodiments of this application, some concepts or terms used in this application are first briefly described.

### 1. Discontinuous reception (discontinuous reception, DRX)

In NR, a network device may configure DRX for UE. The UE turns on a receiver and enters a DRX active state only at necessary time, to monitor downlink control signaling scrambled by a specific RNTI (for example, a C-RNTI or a CS-RNTI), and turns off the receiver and enters a DRX sleep state at other time, without monitoring the downlink control signaling scrambled by the specific RNTI, so that power consumption of the UE is reduced. Through DRX, the UE does not need to monitor or parse a physical downlink control channel (physical downlink control channel, PDCCH) at any time to check whether the network device schedules a resource for the UE for data transmission.

In an NR DRX mechanism, the network device configures the following parameters for the UE:
- DRX cycle: The DRX cycle indicates a discontinuous reception cycle. In each cycle, the UE periodically wakes up for a period of time to receive data. There are two types of DRX cycles: a long cycle and a short cycle. Generally, the long cycle is an integer multiple of the short cycle;
- drx-onDurationTimer: drx-onDurationTimer indicates continuous downlink duration in which the UE needs to monitor the PDCCH, indicating time for which the UE remains awake after waking up. The timer is started after a start location of each DRX cycle is offset backward by drx-SlotOffset;
- drx-InactivityTimer: drx-InactivityTimer indicates continuous downlink duration in which the PDCCH needs to be monitored. This timer is started or restarted when the UE receives a PDCCH indicating new transmission (indicating uplink or downlink new transmission scheduling);
- drx-HARQ-RTT-Timer: drx-HARQ-RTT-Timer indicates a minimum retransmission scheduling interval, and specifies a minimum quantity of symbols after which a next time of HARQ retransmission occurs. The timer may be classified into an uplink timer and a downlink timer, that is, drx-HARQ-RTT-TimerUL and drx-HARQ-RTT-TimerDL. drx-HARQ-RTT-TimerDL is started in the 1^{st} symbol after end of a HARQ feedback for downlink transmission of a HARQ process. drx-HARQ-RTT-TimerUL is started in the 1^{st} symbol after end of uplink transmission of a HARQ process (where if the uplink transmission is repetition transmission, drx-HARQ-RTT-TimerUL is started in the 1^{st} symbol after end of the 1^{st} time of retransmission);
- drx-RetransmissionTimer: drx-RetransmissionTimer indicates a waiting period of time for receiving scheduling for retransmission. The timer indicates a maximum period of time in which the UE in an active state waits for retransmitted data. The timer may be classified into an uplink timer and a downlink timer, that is, drx-RetransmissionTimerUL and drx-RetransmissionTimerDL. drx-RetransmissionTimerDL is started in the 1^{st} symbol after drx-HARQ-RTT-TimerDL of a HARQ process expires, and drx-RetransmissionTimerUL is started in the 1^{st} symbol after drx-HARQ-RTT-TimerUL of a HARQ process expires; and
- drx-shortCycleTimer: drx-shortCycleTimer indicates lifetime of the short cycle. After the timer expires, the long DRX cycle needs to be used. When the short DRX cycle is configured, the timer is started or restarted in the following two cases: (1) drx-InactivityTimer expires. (2) The UE receives a DRX command (command) media access control control element (media access control control element, MAC CE). The DRX command MAC CE is a MAC CE that enables the UE to immediately enter a sleep period. After receiving the control signaling, the UE immediately stops drx-onDurationTimer and drx-InactivityTimer.
- In addition to the foregoing configured parameters, there are drx-SlotOffset and drx-StartOffset. drx-StartOffset is for determining a specific subframe from which the DRX cycle starts, and drx-SlotOffset is for delaying starting of drx-onDurationTimer by a period of time from a front boundary of a subframe to which a start location of the DRX cycle belongs.

The UE maintains the state of the DRX cycle and various timers according to the following rules: The DRX cycle, drx-onDurationTimer, drx-InactivityTimer, and drx-shortCycleTimer are maintained per MAC entity, that is, one MAC entity (entity) of the UE maintains only one set of DRX cycle states, onDurationTimer, InactivityTimer, and the like. drx-HARQ-RTT-Timer and drx-RetransmissionTimer are maintained for each HARQ process, that is, for each HARQ process, RTT-Timer and Retransmission-Timer related to the HARQ process may be started/restarted based on a condition.

On an NR Uu interface, it is defined in a protocol that after the DRX cycle is configured, duration in which the UE is in the DRX active state includes:
- drx-onDurationTimer/drx-InactivityTimer/drx-RetransmissionTimerDL/drx-RetransmissionTimerUL is running;
- ra-ContentionResolutionTimer for receiving Msg4 is running in a random access process;
- the UE sends a scheduling request (scheduling request, SR) on a PUCCH, but the triggered SR is still in a suspended state; and
- in a collision-free random access process, the UE successfully receives a random access response (random access response, RAR) but does not receive a new transmission scheduled by a PDCCH that is scrambled by a cell radio network temporary identifier (cell radio network temporary identifier, C-RNTI).

In 3GPP Release 17 (Rel-17), performance of XR services supported by NR is evaluated. It is found that a DRX configuration is beneficial to energy saving of XR devices. For example, an existing DRX mechanism is enhanced. For example, a DRX configuration of a non-integer DRX cycle is supported, to match an XR service of a non-integer cycle. This is very beneficial to XR energy saving. However, the XR service has jitter, causing a mismatch between arrival of a downlink service data packet and the DRX cycle. As a result, a service transmission delay increases, and service experience is affected.

### (2) Semi-persistent scheduling (semi-persistent scheduling, SPS)

In NR, the network device may configure a SPS resource for the UE, and activate/deactivate SPS by using downlink control information (downlink control information, DCI). When activating the SPS by using the DCI, the network device specifies a position of an SPS resource, and a system frame number (system frame number, SFN) and a slot that correspond to a time domain position of the indicated resource are respectively denoted as SFNstart time and slotstart time. The UE determines, by using a given formula, a time domain position at which an SPS resource appears, that is, a specific slot that is of a specific SFN and in which the SPS resource appears.

### 3. Cloud extended reality (cloud XR)

Cloud XR (which may also be referred to as cloudification of XR) means that technologies such as cloud computing and cloud rendering are introduced into an application of the XR service, and a display output, a sound output, and the like of a cloud are encoded and compressed and then transmitted to an XR terminal through a network.

### 4. Frame integrity transmission

During transmission, one video frame (video frame) is divided into a plurality of IP data packets for transmission. These IP packets are of same importance. If one or more IP packets are lost during transmission or because a transmission delay cannot satisfy a PDB (packet delay budget) requirement, an application layer cannot correctly decode the original video frame.

### 5. Dependency between frames

During encoding, video streams are encoded into different types of frames, for example, an I frame and a P frame, or an I frame, a P frame, and a B frame. These video frames may be dependent on each other. For example, the I frame may be decoded independently without depending on other frames, the P frame needs to be decoded depending on a previous I frame or a previous P frame, and the B frame needs to be decoded depending on previous and subsequent consecutive P frames.

### 6. Physical downlink control channel (physical downlink control channel, PDCCH)

In an LTE system, a PDCCH is a physical channel and carries DCI (Downlink Control Information). Information transmitted through the PDCCH includes common control information (system information, paging information, and the like) and/or user-specific information (a downlink resource allocation indication, UL grants, an uplink power control parameter, and the like). In LTE, both uplink resource scheduling information and downlink resource scheduling information are carried by the PDCCH. Generally, there may be a plurality of PDCCHs in one subframe.

A PDCCH monitoring occasion is also referred to as a PDCCH occasion, and is configured based on a control resource set (CORESET). Time domain information may be accurate to a symbol level. That a terminal deactivates a DRX function is actually equivalent to a case in which the DRX function is not configured. To be specific, the terminal does not distinguish between a DRX activation time period and a DRX non-activation time period and monitors all PDCCH occasions (instead of stopping monitoring the PDCCH occasions). Conversely, that the terminal activates or resumes the DRX function may mean that the terminal distinguishes between the DRX activation time period and the DRX non-activation time period based on a DRX configuration, and the terminal monitors the PDCCH occasions only within the DRX activation time period.

Embodiments provided in this application are applicable to a plurality of different scenarios. FIG. 4 to FIG. 6 are diagrams of several system frameworks to which embodiments of this application are applicable.

FIG. 4 is a diagram of system network elements to which an embodiment of this application is applicable. FIG. 4 shows a system 400, including a cloud server 410, a core network and access network 420 (which may be referred to as a transmission network 420 for short, for example, an LTE network, a 5G network, or a 6G network), and an XR terminal 430. The cloud server 410 may be configured to encode/decode and render XR source data, the transmission network 420 may be configured to perform transmission of XR data, and the XR terminal 430 provides diversified XR experience for a user by processing the XR data. It may be understood that another apparatus may be further included between the transmission network 420 and the XR terminal 430. For example, another terminal (for example, a mobile phone, a laptop computer, or a vehicle) and/or a network device (for example, a relay device, a Wi-Fi router, or a Wi-Fi access point) may be further included. The XR terminal 430 obtains the XR data from the transmission network 420 through the another terminal and/or the network device. Optionally, the system 400 further includes a centralized controller 440. The centralized controller 440 may receive/collect data from one or more of the cloud server 410, the transmission network 420, or the XR terminal 430, or may send data to one or more of the cloud server 410, the transmission network 420, or the XR terminal 430. It may be understood that the centralized controller 440 may be deployed independently of the cloud server 410, the transmission network 420, and the XR terminal 430, or may be deployed in the cloud server 410, the transmission network 420, or the XR terminal 430. Alternatively, the centralized controller 440 may not be deployed, but a function of the centralized controller 440 is implemented by the cloud server 410, the transmission network 420, or the XR terminal 430.

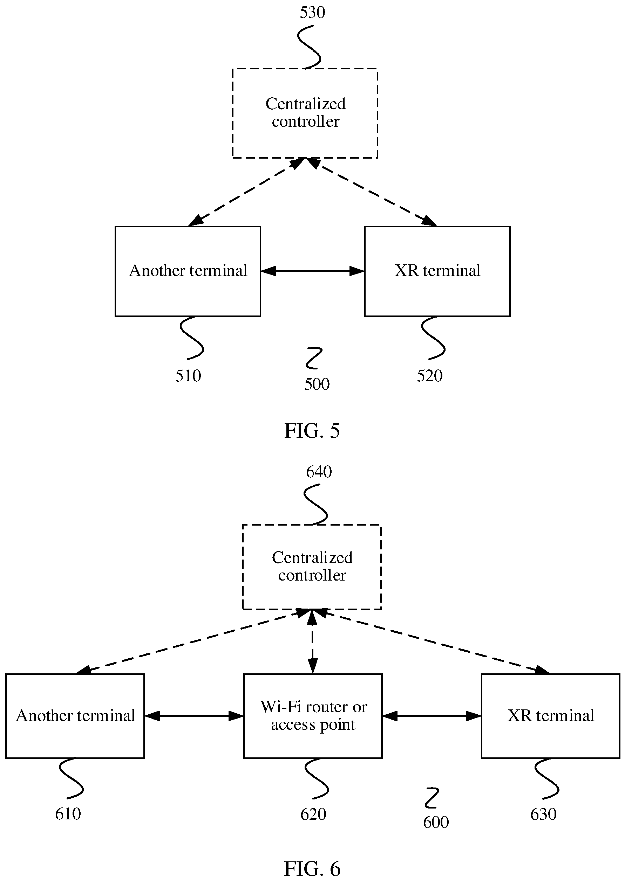

FIG. 5 is another diagram of system network elements to which an embodiment of this application is applicable. FIG. 5 shows a system 500, including an XR terminal 520 and another terminal 510. The another terminal 510 is a terminal other than the XR terminal 520. The another terminal 510 may be an XR terminal, or may be a common terminal (which may also be referred to as a non-XR terminal). The another terminal 510 may perform transmission of XR data to the XR terminal 520. Optionally, the system 500 further includes a centralized controller 530. The centralized controller 530 may receive/collect data from the XR terminal 520 and/or the another terminal 510, or may send data to the XR terminal 520 and/or the another terminal 510. It may be understood that the centralized controller 530 may be deployed independently of the XR terminal 520 and the another terminal 510, or may be deployed in the XR terminal 520 or the another terminal 510. Alternatively, the centralized controller 530 may not be deployed, but a function of the centralized controller 530 is implemented by the XR terminal 520 or the another terminal 510.

FIG. 6 is another diagram of system network elements to which an embodiment of this application is applicable. FIG. 6 shows a system 600, including an XR terminal 630, a Wi-Fi router or Wi-Fi access point 620 (which may be referred to as a Wi-Fi apparatus 620), and another terminal 610. The another terminal 610 is a terminal other than the XR terminal 630. The another terminal 610 may be an XR terminal, or may be a common terminal (which may also be referred to as a non-XR terminal). The another terminal 610 may perform transmission of XR data to the XR terminal 630 through the Wi-Fi apparatus 620. Optionally, the system 600 further includes a centralized controller 640. The centralized controller 640 may receive/collect data from one or more of the another terminal 610, the Wi-Fi apparatus 620, or the XR terminal 630, or may send data to one or more of the another terminal 610, the Wi-Fi apparatus 620, or the XR terminal 630. It may be understood that the centralized controller 640 may be deployed independently of the another terminal 610, the Wi-Fi apparatus 620, and the XR terminal 630, or may be deployed in the another terminal 610, the Wi-Fi apparatus 620, or the XR terminal 630. Alternatively, the centralized controller 640 may not be deployed, but a function of the centralized controller 640 is implemented by the another terminal 610, the Wi-Fi apparatus 620, or the XR terminal 630.

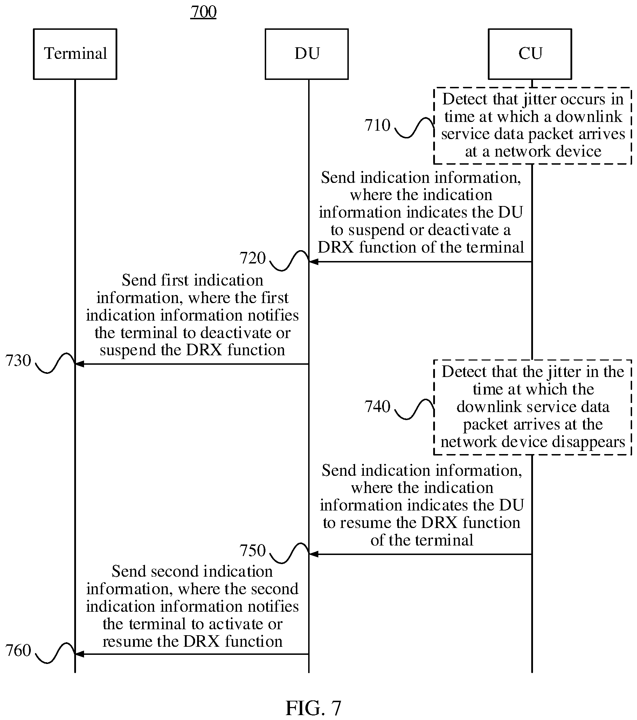

FIG. 7 is a schematic flowchart of a communication method 700 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 7 may be the same or may be different. The execution body of the method may be a centralized controller, or may be a chip, a chip system, a processor, or the like that supports the centralized controller in implementing the method.

In an implementation of the method 700, the network device may have an architecture in which a CU and a DU are separated. As shown in FIG. 7, the method 700 in this embodiment may include part 710, part 720, part 730, part 740, part 750, and part 760.

Part 710: The CU detects that jitter occurs in time at which a downlink service data packet arrives at the network device. It may be understood that a jitter detection method and a detection body are not limited in this application. It may be understood that part 710 is an optional part of the method 700.

In a possible implementation of part 710, information corresponding to the jitter includes one or more of the following: jitter existence information, jitter range information, or jitter identification information.

For example, the jitter existence information indicates whether the jitter exists. For example, a parameter jitter_existence may indicate whether the jitter exists in the downlink service data packet. Optionally, when the jitter information includes the jitter existence information, it indicates that the jitter exists. When the jitter information does not include the jitter existence information, it indicates that the jitter does not exist. Optionally, whether the jitter exists may alternatively be indicated by assigning a value to the parameter. For example, if the value is "true", it indicates that the jitter exists. If the value is "false", it indicates that the jitter does not exist.

For example, the jitter range information indicates range information of the jitter, for example, may be duration indication information in a unit of a millisecond/second/radio frame.

For example, the jitter identification information indicates a DRB identifier or a QoS flow identifier (QoS Flow Identifier, QFI) corresponding to downlink service data packet in which jitter exists. It may be understood that the jitter information may be applicable to descriptions of all embodiments of this application, and details are not described again subsequently.

Part 720: The CU sends indication information to the DU, where the indication information indicates the DU to suspend or deactivate a DRX function of a terminal or indicates that the jitter occurs in the downlink service data packet/indicates the jitter information of the downlink service data packet. For example, the CU may include an information element DRX Temporary Cancellation in an F1AP UE CONTEXT MODIFICATION REQUEST message as the indication information.

In a possible implementation of part 720, the indication information includes one or more of cell indication information, bandwidth part (bandwidth part, BWP) indication information, logical channel identifier (logical channel identifier, LCID) indication information, data radio bearer (data radio bearer, DRB) indication information, frequency band indication information, DRX indication information, or duration indication information.

In a possible implementation of part 720, if the indication information includes cell indication information, for example, the cell indication information may be an index (index) of one or more serving cells (serving cells), the index is used by the DU to indicate the terminal to deactivate the DRX function in an indicated cell, that is, the DU indicates the terminal to stop monitoring PDCCH occasions (occasions) in the indicated cell. The cell indication information may alternatively be cell set information, for example, may be an index of one or more cell sets. The CU may notify the DU or the terminal of one or more serving cell sets in advance. Each serving cell set is identified by using one index value, and includes at least one serving cell. After the CU detects that the jitter occurs in the downlink service data packet, the CU may indicate index values of the serving cell sets to the DU, to indicate to deactivate the DRX function of the terminal in serving cells included in the serving cell sets.

In a possible implementation of part 720, if the indication information includes BWP indication information, for example, the BWP indication information may be one or more BWP indexes, the index is used by the DU to indicate the terminal to deactivate the DRX function on an indicated BWP, that is, the terminal starts to continuously monitor PDCCH occasions on the BWP indicated by the DU, without distinguishing between a DRX activation time period and a DRX non-activation time period.

In a possible implementation of part 720, if the indication information includes BWP indication information in a serving cell, for example, the BWP indication information may be a serving cell index and one or more BWP indexes, the BWP indication information in the serving cell is used by the DU to indicate the terminal to deactivate the DRX function on a corresponding BWP in the serving cell, that is, the terminal starts to continuously monitor PDCCH occasions on the BWP in the serving cell indicated by the DU.

In a possible implementation of part 720, if the indication information includes LCID information or DRB information, for example, the LCID information or the DRB information indicates at least one LCID value or DRB index, a configuration of a logical channel corresponding to the LCID value or the DRB index includes information about an associated serving cell, and the DU indicates the terminal to deactivate the DRX function in the serving cell associated with the corresponding logical channel.

In a possible implementation of part 720, if the indication information includes frequency band indication information, for example, the frequency band indication information may indicate an FR 1 (Frequency Range 1) frequency band, an FR 2 (Frequency Range 2) frequency band, an FR 2-1 (Frequency Range 2-1) frequency band, or an FR 2-2 (Frequency Range 2-2) frequency band, the frequency band indication information is used by the DU to indicate the terminal to deactivate the DRX function on a corresponding frequency band.

In a possible implementation of part 720, if the indication information includes DRX information, for example, the DRX information may be a DRX index, the network device may configure a plurality of DRX configurations for the terminal, and each DRX configuration corresponds to one DRX index, and is associated with a group of serving cells. The DRX information is used by the DU to indicate the terminal to deactivate the DRX function in a serving cell associated with a corresponding DRX configuration.

In a possible implementation of part 720, if the indication information includes duration indication information, for example, the duration indication information may be time information in a unit of a DRX cycle, a millisecond, a radio frame, or the like, the time information indicates a time length in which subsequent jitter may exist, or indicates a time length in which the terminal deactivates the DRX function. Optionally, if a MAC CE/L1 signaling carrying the indication information indicates only the duration indication information, after receiving the indication information from the DU, the terminal continuously monitors PDCCH occasions in all cells within a duration range indicated by the DU. It may be understood that when signaling sent by the DU to the terminal explicitly or implicitly indicates duration indication information of deactivating a DRX operation, after the specified duration ends, the terminal automatically activates or resumes the DRX function. In this case, the network device depends on that the terminal automatically activates or resumes the DRX operation, and subsequent parts 740 to 760 do not need to be performed.

Part 730: The DU sends first indication information to the terminal, where the first indication information notifies the terminal to deactivate or suspend the DRX function.

In a possible implementation of part 730, the first indication information is carried in a MAC CE or L1 signaling. Optionally, when detecting that the jitter occurs in the time at which the downlink service data packet arrives at the network device, the network device may notify, by using the MAC CE or the L1 signaling carrying the first indication information, the terminal to deactivate or suspend the DRX function.

In a possible implementation of part 730, the first indication information includes one or more of cell indication information, bandwidth part (bandwidth part, BWP) indication information, logical channel identifier (logical channel identifier, LCID) indication information, data radio bearer (data radio bearer, DRB) indication information, frequency band indication information, DRX indication information, or duration indication information.

In a possible implementation of part 730, if the first indication information includes cell indication information, for example, the cell indication information may be an index (index) of one or more serving cells (serving cells), the index indicates the terminal to deactivate the DRX function in an indicated cell, that is, the terminal starts to continuously monitor PDCCH occasions (occasions) in the indicated cell. The cell indication information may alternatively be cell set information, for example, may be an index of one or more cell sets. The CU may notify the DU or the terminal of one or more serving cell sets in advance. Each serving cell set is identified by using one index value, and includes at least one serving cell. After the CU detects that the jitter occurs in the downlink service data packet, the CU may indicate index values of the serving cell sets to the DU, to indicate to deactivate the DRX function of the terminal in serving cells included in the serving cell sets.

In a possible implementation of part 730, if the first indication information includes BWP indication information, for example, the BWP indication information may be one or more BWP indexes, the index indicates the terminal to deactivate the DRX function on an indicated BWP, that is, the terminal starts to continuously monitor PDCCH occasions on the indicated BWP, without distinguishing between a DRX activation time period and a DRX non-activation time period.

In a possible implementation of part 730, if the first indication information includes BWP indication information in a serving cell, for example, the BWP indication information may be a serving cell index and one or more BWP indexes, the BWP indication information in the serving cell indicates the terminal to deactivate the DRX function on a corresponding BWP in the serving cell, that is, the terminal starts to continuously monitor PDCCH occasions on an indicated BWP in the serving cell.

In a possible implementation of part 730, if the first indication information includes LCID information or DRB information, for example, the LCID information or the DRB information indicates at least one LCID value or DRB index, a configuration of a logical channel corresponding to the LCID value or the DRB index includes information about an associated serving cell, to indicate the terminal to deactivate the DRX function in the serving cell associated with the corresponding logical channel.

In a possible implementation of part 730, if the first indication information includes frequency band indication information, for example, the frequency band indication information may indicate an FR 1 (Frequency Range 1) frequency band, an FR 2 (Frequency Range 2) frequency band, an FR 2-1 (Frequency Range 2-1) frequency band, or an FR 2-2 (Frequency Range 2-2) frequency band, the frequency band indication information indicates the terminal to deactivate the DRX function on a corresponding frequency band.

In a possible implementation of part 730, if the first indication information includes DRX information, for example, the DRX information may be a DRX index, the network device may configure a plurality of DRX configurations for the terminal, and each DRX configuration corresponds to one DRX index, and is associated with a group of serving cells. The DRX information indicates the terminal to deactivate the DRX function in a serving cell associated with a corresponding DRX configuration.

In a possible implementation of part 730, if the first indication information includes duration indication information, for example, the duration indication information may be time information in a unit of a DRX cycle, a millisecond, a radio frame, or the like, the time information indicates a time length in which subsequent jitter may exist, or indicates a time length in which the terminal deactivates the DRX function. Optionally, if the MAC CE/L1 signaling carrying the first indication information indicates only the duration indication information, after receiving the indication information, the terminal continuously monitors PDCCH occasions in all cells within an indicated duration range. Optionally, the duration indication information may not be explicitly carried in the MAC CE or the L1 signaling, but is preconfigured by the network device by using RRC configuration signaling. When receiving the MAC CE or the L1 signaling, the terminal is in a DRX active state within a duration range specified by using the RRC configuration signaling. If the sent MAC CE/L1 signaling indicates the duration indication information, or the duration indication information is preconfigured in the RRC signaling, and the MAC CE/L1 signaling indicates at least one of the foregoing described cell indication information, BWP indication information, LCID information, DRB information, frequency band indication information, or DRX information, the terminal continuously monitors PDCCH occasions within the duration range indicated by the MAC CE/L1 signaling or the RRC configuration signaling in a corresponding cell or cell set or a serving cell associated with a BWP or an LCID or a serving cell associated with a frequency band or a DRX group. It may be understood that when signaling sent by the DU to the terminal explicitly or implicitly indicates duration indication information of deactivating a DRX operation, after the specified duration ends, the terminal automatically activates or resumes the DRX function. In this case, the network device depends on that the terminal automatically activates or resumes the DRX operation, and subsequent parts 740 to 760 do not need to be performed.

Part 740: The CU detects that the jitter in the time at which the downlink service data packet arrives at the network device disappears. It may be understood that a jitter detection method and a detection body are not limited in this application. It may be understood that part 740 is an optional part of the method 700.

Part 750: The CU sends indication information to the DU, where the indication information indicates the DU to resume the DRX function of the terminal, or indicates that the jitter of the downlink service data packet has been eliminated. For example, the CU may include an information element DRX Resumption in the F1AP UE CONTEXT MODIFICATION REQUEST message as the indication information.

In a possible implementation of part 750, the indication information is used by the DU to indicate the terminal to activate or resume the DRX function, and the indication information includes one or more of cell indication information, BWP indication information, LCID indication information, DRB indication information, frequency band indication information, or DRX indication information.

In a possible implementation of part 750, if the indication information includes cell indication information, for example, the cell indication information may be an index of one or more serving cells, the index is used by the DU to indicate the terminal to resume the DRX function in an indicated cell, that is, the terminal monitors PDCCH occasions only within a DRX activation time period in the cell indicated by the DU, and does not monitor PDCCH occasions within a DRX non-activation time period. The cell indication information may alternatively be serving cell set information, for example, may be an index of one or more serving cell sets, and is used by the DU to indicate the terminal to activate the DRX function in serving cells included in the serving cell sets.

In a possible implementation of part 750, if the indication information includes BWP indication information, for example, the BWP indication information may be one or more BWP indexes, the index is used by the DU to indicate the terminal to activate the DRX function on an indicated BWP, that is, the terminal monitors PDCCH occasions only within a DRX activation time period on the BWP indicated by the DU.

In a possible implementation of part 750, if the indication information includes BWP indication information in a serving cell, for example, the BWP indication information may be a serving cell index and one or more BWP indexes, the BWP indication information in the serving cell is used by the DU to indicate the terminal to activate the DRX function on an indicated BWP in the cell, that is, the terminal monitors PDCCH occasions only within a DRX activation time period on the BWP in the cell indicated by the DU.

In a possible implementation of part 750, if the indication information includes LCID information or DRB information, for example, the LCID information or the DRB information indicates at least one LCID value or DRB index, a configuration of a logical channel corresponding to the LCID value or the DRB index includes information about an associated serving cell, and the DU indicates the terminal to activate the DRX function in the serving cell associated with the corresponding logical channel.

In a possible implementation of part 750, if the indication information includes frequency band indication information, for example, the frequency band indication information may indicate an FR 1 frequency band, an FR 2 frequency band, an FR 2-1 frequency band, or an FR 2-2 frequency band, the frequency band indication information is used by the DU to indicate the terminal to activate the DRX function on a corresponding frequency band.

In a possible implementation of part 750, if the indication information includes DRX information, for example, the DRX information may be a DRX index, the network device may configure a plurality of DRX configurations for the terminal, and each DRX configuration corresponds to one DRX index, and is associated with a group of serving cells. The DRX information is used by the DU to indicate the terminal to activate the DRX function in a serving cell associated with a corresponding DRX configuration.

Part 760: The DU sends second indication information to the terminal, where the second indication information notifies the terminal to activate or resume the DRX function.

In a possible implementation of part 760, the second indication information is carried in a MAC CE or L1 signaling. Optionally, when detecting that the jitter in the time at which the downlink service data packet arrives at the network device disappears, the network device may notify, by using the MAC CE or the L1 signaling carrying the second indication information, the terminal to activate or resume the DRX function.

In a possible implementation of part 760, the second indication information indicates the terminal to activate or resume the DRX function, and the second indication information includes one or more of cell indication information, BWP indication information, LCID indication information, DRB indication information, frequency band indication information, or DRX indication information.

In a possible implementation of part 760, if the second indication information includes cell indication information, for example, the cell indication information may be an index of one or more serving cells, the index indicates the terminal to resume the DRX function in an indicated cell, that is, the terminal monitors PDCCH occasions only within a DRX activation time period in the indicated cell, and does not monitor PDCCH occasions within a DRX non-activation time period. The cell indication information may alternatively be serving cell set information, for example, may be an index of one or more serving cell sets, to indicate the terminal to activate the DRX function in serving cells included in the serving cell sets.

In a possible implementation of part 760, if the second indication information includes BWP indication information, for example, the BWP indication information may be one or more BWP indexes, the index indicates the terminal to activate the DRX function on an indicated BWP, that is, the terminal monitors PDCCH occasions only within a DRX activation time period on the indicated BWP.

In a possible implementation of part 760, if the second indication information includes BWP indication information in a serving cell, for example, the BWP indication information may be a serving cell index and one or more BWP indexes, the BWP indication information in the serving cell indicates the terminal to activate the DRX function on an indicated BWP in the cell, that is, the terminal monitors PDCCH occasions only within a DRX activation time period on the indicated BWP in the cell.

In a possible implementation of part 760, if the second indication information includes LCID information or DRB information, for example, the LCID information or the DRB information indicates at least one LCID value or DRB index, a configuration of a logical channel corresponding to the LCID value or the DRB index includes information about an associated serving cell, to indicate the terminal to activate the DRX function in the serving cell associated with the corresponding logical channel.

In a possible implementation of part 760, if the second indication information includes frequency band indication information, for example, the frequency band indication information may indicate an FR 1 frequency band, an FR 2 frequency band, an FR 2-1 frequency band, or an FR 2-2 frequency band, the frequency band indication information indicates the terminal to activate the DRX function on a corresponding frequency band.

In a possible implementation of part 760, if the second indication information includes DRX information, for example, the DRX information may be a DRX index, the network device may configure a plurality of DRX configurations for the terminal, and each DRX configuration corresponds to one DRX index, and is associated with a group of serving cells. The DRX information indicates the terminal to activate the DRX function in a serving cell associated with a corresponding DRX configuration.

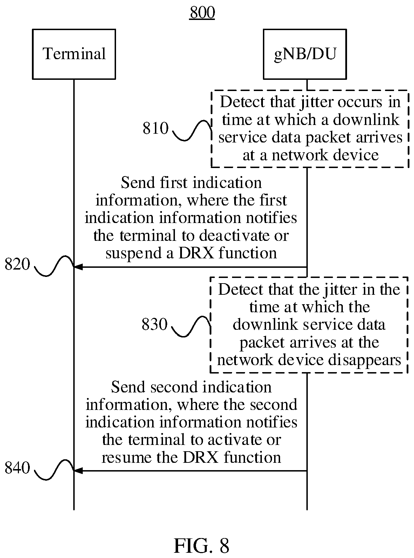

FIG. 8 is a schematic flowchart of a communication method 800 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 8 may be the same or may be different. The execution body of the method may be a centralized controller, or may be a chip, a chip system, a processor, or the like that supports the centralized controller in implementing the method.

In an implementation of the method 800, the network device may have an architecture in which a CU and a DU are separated. As shown in FIG. 8, the method 800 in this embodiment may include part 810, part 820, part 830, and part 840.

Part 810: The network device detects that jitter occurs in time at which a downlink service data packet arrives at the network device. That the network device detects that the jitter occurs in the time at which the downlink service data packet arrives at the network device may be that the DU detects the jitter. It may be understood that a jitter detection method and a detection body are not limited in this application. It may be understood that part 810 is an optional part of the method 800.

Part 820: The network device/DU sends first indication information to the terminal, where the first indication information notifies the terminal to deactivate or suspend a DRX function. Because content and a function of the first indication information are the same as those in part 730, details are not described herein again.

Part 830: The network device detects that the jitter in the time at which the downlink service data packet arrives at the network device disappears. That the network device detects that the jitter in the time at which the downlink service data packet arrives at the network device disappears may be that the DU detects that the jitter disappears. It may be understood that a jitter detection method and a detection body are not limited in this application. It may be understood that part 830 is an optional part of the method 800.

Part 840: The network device/DU sends second indication information to the terminal, where the second indication information notifies the terminal to activate or resume the DRX function. Because content and a function of the second indication information are the same as those in part 760, details are not described herein again.

In an implementation of the parts of the method 800, after detecting that jitter occurs in the downlink service data packet, the network device/DU does not directly allow, by using a MAC CE or L1 signaling, UE to deactivate a DRX operation, but notifies, by using the MAC CE or the L1 signaling before each DRX cycle or in each DRX cycle (for example, when drx-onDurationTimer runs), the terminal that the terminal needs to be in a DRX active state in the DRX cycle, or allows, by using the L1 signaling, the terminal to start/restart drx-onDurationTimer or drx-InactivityTimer, so that time for the terminal to be in the active state in the DRX cycle is prolonged. Optionally, the L1 signaling may be implemented by using DCI signaling scrambled by a specific RNTI. For example, the network device preconfigures the RNTI for the terminal, and if necessary, the network device delivers the DCI signaling scrambled by the RNTI to the terminal. Optionally, the network device may allow, by using the MAC CE or the L1 signaling, the terminal to be in the DRX active state in the DRX cycle and N subsequent DRX cycles, where N is an integer greater than 1. It may be understood that N may be preconfigured or explicitly indicated in the MAC CE or the L1 signaling. This is not specifically limited in this application.

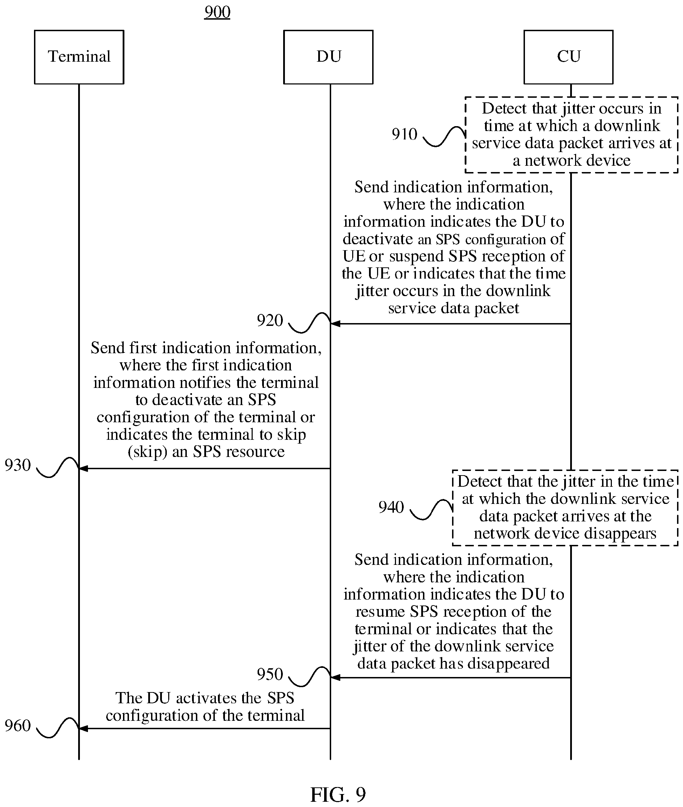

FIG. 9 is a schematic flowchart of a communication method 900 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 9 may be the same or may be different. The execution body of the method may be a centralized controller, or may be a chip, a chip system, a processor, or the like that supports the centralized controller in implementing the method.

In an implementation of the method 900, the network device may have an architecture in which a CU and a DU are separated. As shown in FIG. 9, the method 900 in this embodiment may include part 910, part 920, part 930, part 940, part 950, and part 960.

Part 910: The CU detects that jitter occurs in time at which a downlink service data packet arrives at the network device. It may be understood that a jitter detection method and a detection body are not limited in this application. It may be understood that part 910 is an optional part of the method 900.

Part 920: The CU sends indication information to the DU, where the indication information indicates the DU to deactivate an SPS configuration of UE or suspend SPS reception of the UE, or indicates that the time jitter occurs in the downlink service data packet/indicates jitter information of the downlink service data packet.

In an implementation of part 920, the CU may include an information element SPS Temporary Cancellation in an F1AP UE CONTEXT MODIFICATION REQUEST message as the indication information.

Optionally, the indication information includes SPS information. For example, the SPS information may be one or more SPS indexes. The one or more SPS indexes indicate the DU to deactivate SPS configurations.

Optionally, the indication information includes cell indication information. For example, the cell indication information may be an index (index) of one or more serving cells (serving cells). The index indicates the DU to temporarily deactivate SPS configurations in the cells.

Optionally, the indication information includes SPS configuration set information. For example, the SPS configuration set information may be an index of one or more SPS configuration sets. The CU may notify the DU or the terminal of some SPS configuration sets in advance. Each SPS configuration set is identified by using one index value, and includes at least one SPS configuration. After the CU detects that the jitter occurs in the downlink service data packet, the CU may indicate index values of the SPS configuration sets to the DU, to indicate the DU to deactivate SPS configurations included in the SPS configuration sets.

Optionally, the indication information includes duration indication information. For example, the duration indication information may be time information in a unit of a DRX cycle, a millisecond, a slot, a radio frame, an SPS periodicity, or the like. The time information indicates a time length in which subsequent jitter may exist, or indicates a time length in which the DU suspends the SPS reception of the UE.

Part 930: The DU sends first indication information to the terminal, where the first indication information notifies the terminal to deactivate an SPS configuration of the terminal or indicates the terminal to skip (skip) an SPS resource.

In a possible implementation of part 930, the DU may send L1/L2 control signaling to the terminal, to indicate the terminal to deactivate the SPS configuration/skip the SPS resource in a subsequent period of time. The L1 signaling may be carried on a PDCCH, and is, for example, DCI. The L2 signaling may be a MAC CE. The control signaling may carry at least one of the indication information in part 920. Optionally, when the control signaling sent by the DU does not carry the duration indication information, and the network device preconfigures, by using RRC configuration signaling, duration of deactivating the SPS configuration/skipping the SPS resource, the terminal deactivates the SPS configuration/skips the SPS resource in a preconfigured period of time.

Optionally, after receiving the control signaling delivered by the DU, the terminal deactivates the SPS configuration/skips the SPS resource in an indicated period of time, and the UE does not perform receiving or corresponding processing (for example, actions such as PDSCH decoding and providing a HARQ feedback) on the corresponding SPS resource, or it may be considered that the SPS resource in the period of time is invalid (invalid). After the period of time ends, the terminal automatically activates the SPS configuration or resumes SPS reception processing.

In a possible implementation of part 930, after receiving the L1/L2 control signaling, the terminal may start a timer A. When the timer A runs, the terminal deactivates the SPS configuration/skips the SPS resource. When the timer A runs, the terminal may restart the timer A if the control signaling is received again. After the timer A expires, the terminal automatically activates the SPS configuration or resumes SPS reception processing.

Optionally, part 930 may alternatively be implemented by suspending the SPS reception of the terminal through SPS deactivation or SPS group deactivation in a conventional technology.

Optionally, when the signaling sent by the DU to the terminal explicitly or implicitly indicates the duration indication information of deactivating the SPS configuration/skipping the SPS resource, after the jitter disappears, the CU and the DU may not perform subsequent parts, because the terminal automatically resumes the SPS reception after the specified duration ends. In this case, the network device depends on that the terminal automatically activates the SPS configuration or resumes an SPS operation.

Part 940: The CU detects that the jitter of the downlink service data packet disappears, that is, the downlink service data packet arrives at the network device again based on a predetermined periodicity. It may be understood that a jitter detection method and a detection body are not limited in this application. It may be understood that part 940 is an optional part of the method 900.

Part 950: The CU sends second indication information to the DU, where the second indication information indicates the DU to resume the SPS reception of the terminal, or indicates that the jitter of the downlink service data packet has disappeared.

In a possible implementation of part 950, the CU may include an information element SPS Resumption in the F1AP UE CONTEXT MODIFICATION REQUEST message as the indication information.

Optionally, the second indication information includes SPS information. For example, the SPS information may be one or more SPS indexes. The indexes indicate the DU to activate SPS configurations.

Optionally, the second indication information includes cell indication information. For example, the cell indication information may be an index (index) of one or more serving cells (serving cells). The index indicates the DU to activate SPS configurations in the cells.

Optionally, the second indication information includes SPS configuration set information. For example, the SPS configuration set information may be an index of one or more SPS configuration sets. The index indicates the DU to activate SPS configurations included in the SPS configuration sets.

It may be understood that part 950 is an optional part of the method 900.

Part 960: The DU activates the SPS configuration of the terminal. Optionally, in part 960, the SPS reception of the UE may alternatively be resumed through SPS activation in the conventional technology. It may be understood that part 960 is an optional part of the method 900.

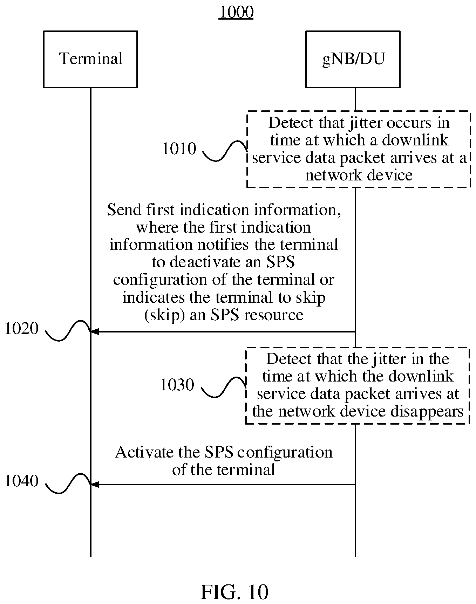

FIG. 10 is a schematic flowchart of a communication method 1000 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 10 may be the same or may be different. The execution body of the method may be a centralized controller, or may be a chip, a chip system, a processor, or the like that supports the centralized controller in implementing the method.

In an implementation of the method 1000, the network device may have an architecture in which a CU and a DU are separated. As shown in FIG. 10, the method 1000 in this embodiment may include a part 1010, a part 1020, a part 1030, and a part 1040.

Part 1010: The network device/DU detects that jitter occurs in time at which a downlink service data packet arrives at the network device. It may be understood that a jitter detection method and a detection body are not limited in this application. It may be understood that the part 1010 is an optional part of the method 1000.

Part 1020: The network device/DU sends first indication information to the terminal, where the first indication information notifies the terminal to deactivate an SPS configuration of the terminal or indicates the terminal to skip (skip) an SPS resource.

In a possible implementation of the part 1020, the DU may send L1/L2 control signaling to the terminal, to indicate the terminal to deactivate the SPS configuration/skip the SPS resource in a subsequent period of time. The L1 signaling may be carried on a PDCCH, and is, for example, UCI. The L2 signaling may be a MAC CE. The control signaling may carry at least one of the indication information in part 920. Optionally, when the control signaling sent by the DU does not carry duration indication information, and the network device preconfigures, by using RRC configuration signaling, duration of deactivating the SPS configuration/skipping the SPS resource, the terminal deactivates the SPS configuration/skips the SPS resource in a preconfigured period of time.

Optionally, after receiving the control signaling delivered by the DU, the terminal deactivates the SPS configuration/skips the SPS resource in an indicated period of time, and the UE does not perform receiving or corresponding processing (for example, actions such as PDSCH decoding and providing a HARQ feedback) on the corresponding SPS resource, or it may be considered that the SPS resource in the period of time is invalid (invalid). After the period of time ends, the terminal automatically activates the SPS configuration or resumes SPS reception processing.

In a possible implementation of the part 1020, after receiving the L1/L2 control signaling, the terminal may start a timer A. When the timer A runs, the terminal deactivates the SPS configuration/skips the SPS resource. When the timer A runs, the terminal may restart the timer A if the control signaling is received again. After the timer A expires, the terminal automatically activates the SPS configuration or resumes SPS reception processing. Optionally, the part 1020 may alternatively be implemented by suspending the SPS reception of the terminal through SPS deactivation or SPS group deactivation in a conventional technology.

Optionally, when the signaling sent by the network device/DU to the terminal explicitly or implicitly indicates the duration indication information of deactivating the SPS configuration/skipping the SPS resource, after the jitter disappears, the CU and the DU may not perform subsequent parts, because the terminal automatically resumes the SPS reception after the specified duration ends. In this case, the network device depends on that the terminal automatically activates the SPS configuration or resumes an SPS operation.

Part 1030: The network device/DU detects that the jitter of the downlink service data packet disappears, that is, the downlink service data packet arrives at the network device again based on a predetermined periodicity. It may be understood that a jitter detection method and a detection body are not limited in this application. It may be understood that the part 1030 is an optional part of the method 1000.

Part 1040: The network device/DU activates the SPS configuration of the terminal. Optionally, in the part 1040, the SPS reception of the terminal may alternatively be resumed through SPS activation in the conventional technology. It may be understood that the part 1040 is an optional part of the method 1000.

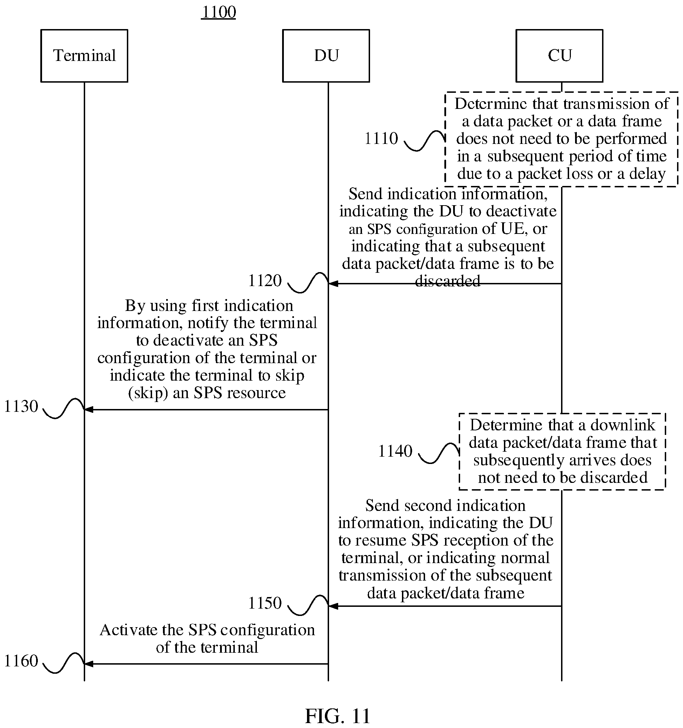

FIG. 11 is a schematic flowchart of a communication method 1100 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 11 may be the same or may be different. The execution body of the method may be a centralized controller, or may be a chip, a chip system, a processor, or the like that supports the centralized controller in implementing the method.

In an implementation of the method 1100, the network device may have an architecture in which a CU and a DU are separated. Optionally, the method 1100 may be triggered when any one of the following conditions is met.
(1) When the CU finds that some data packets included in an application layer data frame (for example, referred to as an application PDU, a media unit/PDU, or a PDU set) do not satisfy a transmission delay requirement due to a packet loss or a delay, the CU may terminate transmission of another data packet in the data frame.
(2) Alternatively, when the CU finds that a transmission frame does not satisfy a transmission delay requirement due to a packet loss or a delay during transmission, the CU may terminate transmission of all subsequent data frames that depend on the transmission frame. In a subsequent period of time, the network device does not need to perform transmission of downlink data to the terminal by using an SPS resource, and the network device may choose to schedule this part of resources for another terminal for use.

As shown in FIG. 11, the method 1100 in this embodiment may include part 1110, part 1120, and part 1130. Part 1110: The CU determines that transmission of a data packet or a data frame does not need to be performed in a subsequent period of time due to a packet loss or a delay. It may be understood that how the CU specifically determines that transmission of the subsequent data frame does not need to be performed is an implementation of the CU. This is not specifically limited in this application. It may be understood that part 1110 is an optional part of the method 1100.

Part 1120: The CU sends indication information to the DU, indicating the DU to deactivate an SPS configuration of UE or indicating that a subsequent data packet/data frame is to be discarded.

In a possible implementation of part 1120, the CU may include an information element SPS Temporary Cancellation in an F1AP UE CONTEXT MODIFICATION REQUEST message as the indication information.

Optionally, the indication information includes SPS information. For example, the SPS information may be one or more SPS indexes. The one or more SPS indexes indicate the DU to deactivate SPS configurations.

Optionally, the indication information includes cell indication information. For example, the cell indication information may be an index (index) of one or more serving cells (serving cells). The index indicates the DU to temporarily deactivate SPS configurations in the serving cells.

Optionally, the indication information includes SPS configuration set information. For example, the SPS configuration set information may be an index of one or more SPS configuration sets. The CU may notify the DU or the terminal of some SPS configuration sets in advance. Each SPS configuration set is identified by using one index value, and includes at least one SPS configuration. After the CU detects that jitter occurs in a downlink service data packet, the CU may indicate index values of the SPS configuration sets to the DU, to indicate the DU to deactivate the SPS configurations included in the SPS configuration sets.

Optionally, the indication information includes duration indication information. For example, the duration indication information may be time information in a unit of a DRX cycle, a millisecond, a slot, a radio frame, an SPS periodicity, or the like. The time information indicates a time length in which subsequent jitter may exist, or indicates a time length in which the DU suspends SPS reception of the UE.

Part 1130: By using the first indication information, the DU notifies the terminal to deactivate an SPS configuration of the terminal or indicates the terminal to skip (skip) an SPS resource.

In a possible implementation of part 1130, the DU may send L1/L2 control signaling to the terminal, to indicate the terminal to deactivate the SPS configuration/skip the SPS resource in a subsequent period of time. The L1 signaling may be carried through a PDCCH. The L2 signaling may be a MAC CE. The control signaling may carry at least one of the indication information in part 1120. Optionally, when the control signaling sent by the DU does not carry the duration indication information, and the network device preconfigures, by using RRC configuration signaling, duration of deactivating the SPS configuration/skipping the SPS resource, the terminal deactivates the SPS configuration/skips the SPS resource in a preconfigured period of time.

Optionally, after receiving the control signaling delivered by the DU, the terminal deactivates the SPS configuration/skips the SPS resource in an indicated period of time, and the UE does not perform receiving or corresponding processing (for example, actions such as PDSCH decoding and providing a HARQ feedback) on the corresponding SPS resource, or it may be considered that the SPS resource in the period of time is invalid (invalid). After the period of time ends, the terminal automatically activates the SPS configuration or resumes SPS reception processing.

In a possible implementation of part 1130, after receiving the L1/L2 control signaling, the terminal may start a timer A. When the timer A runs, the terminal deactivates the SPS configuration/skips the SPS resource. When the timer A runs, the terminal may restart the timer A if the control signaling is received again. After the timer A expires, the terminal automatically activates the SPS configuration or resumes SPS reception processing. Optionally, part 1130 may alternatively be implemented by suspending the SPS reception of the terminal through SPS deactivation or SPS group deactivation in a conventional technology.

Optionally, when the signaling sent by the DU to the terminal explicitly or implicitly indicates the duration indication information of deactivating the SPS configuration/skipping the SPS resource, after the jitter disappears, the CU and the DU may not perform subsequent parts, because the terminal automatically resumes the SPS reception after the specified duration ends. In this case, the network device depends on that the terminal automatically activates the SPS configuration or resumes an SPS operation.

Part 1140: The CU determines that a downlink data packet/data frame that subsequently arrives does not need to be discarded. Specifically, how the CU determines that no packet/frame needs to be discarded is an implementation of the CU. This is not specifically limited in this application. It may be understood that part 1140 is an optional part of the method 1100.

Part 1150: The CU sends second indication information to the DU, indicating the DU to resume the SPS reception of the terminal, or indicating normal transmission of the subsequent data packet/data frame.

In a possible implementation of part 1150, the CU may include an information element SPS Resumption in the F1AP UE CONTEXT MODIFICATION REQUEST message as the indication information.

Optionally, the second indication information includes SPS information. For example, the SPS information may be one or more SPS indexes. The indexes indicate the DU to activate SPS configurations.

Optionally, the second indication information includes cell indication information. For example, the cell indication information may be an index (index) of one or more serving cells (serving cells). The index indicates the DU to activate SPS configurations in the cells.

Optionally, the second indication information includes SPS configuration set information. For example, the SPS configuration set information may be an index of one or more SPS configuration sets. The index indicates the DU to activate SPS configurations included in the SPS configuration sets.

It may be understood that part 1150 is an optional part of the method 1100.

Part 1160: The DU activates the SPS configuration of the terminal. Optionally, in part 1160, the SPS reception of the UE may alternatively be resumed through SPS activation in the conventional technology. It may be understood that part 1160 is an optional part of the method 1100.

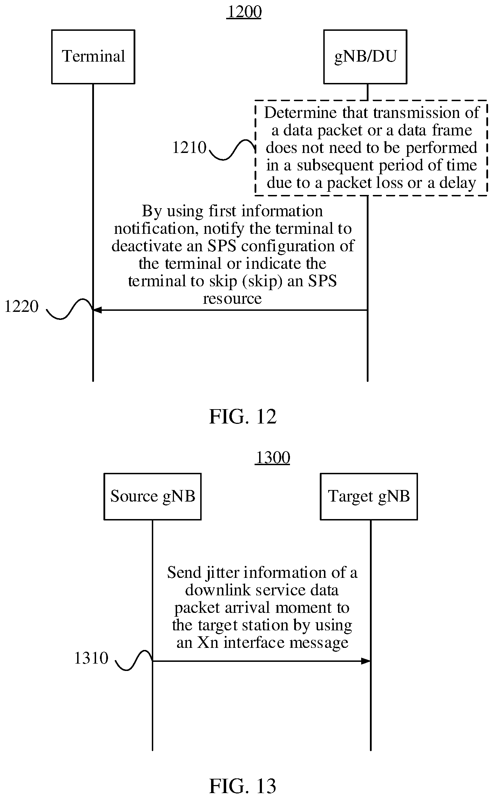

FIG. 12 is a schematic flowchart of a communication method 1200 according to an embodiment of this application. An execution body of the method includes a terminal (for example, an XR terminal) and a network device (for example, a core network device, an access network device, a Wi-Fi router, or a Wi-Fi access point). The terminal may be a chip, a chip system, a processor, or the like that supports the terminal in implementing the method. The network device may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 12 may be the same or may be different. The execution body of the method may be a centralized controller, or may be a chip, a chip system, a processor, or the like that supports the centralized controller in implementing the method.

In an implementation of the method 1200, the network device may have an architecture in which a CU and a DU are separated. Optionally, the method 1200 may be triggered when any one of the following conditions is met.
(1) When the DU finds that some data packets included in an application layer data frame (for example, referred to as an application PDU, a media unit/PDU, or a PDU set) do not satisfy a transmission delay requirement due to a packet loss or a delay, the DU may terminate transmission of another data packet in the data frame.
(2) Alternatively, when the DU finds that a transmission frame does not satisfy a transmission delay requirement due to a packet loss or a delay during transmission, the DU may terminate transmission of all subsequent data frames that depend on the transmission frame. In a subsequent period of time, the network device does not need to perform transmission of downlink data to the terminal by using an SPS resource, and the network device may choose to schedule this part of resources for another terminal for use.

As shown in FIG. 12, the method 1200 in this embodiment may include part 1210, part 1220, part 1230, and part 1240.

Part 1210: The network device/DU determines that transmission of a data packet or a data frame does not need to be performed in a subsequent period of time due to a packet loss or a delay. Specifically, how the DU determines that transmission of the subsequent data frame does not need to be performed is an implementation of the DU. This is not specifically limited in this application. It may be understood that part 1210 is an optional part of the method 1200.

Part 1220: By using first indication information, the network device/DU notifies a terminal to deactivate an SPS configuration of the terminal or indicates the terminal to skip (skip) an SPS resource.

In a possible implementation of part 1220, the DU may send L1/L2 control signaling to the terminal, to indicate the terminal to deactivate the SPS configuration/skip the SPS resource in a subsequent period of time. The L1 signaling may be carried through a PDCCH. The L2 signaling may be a MAC CE. The control signaling may carry at least one of the indication information in part 1120. Optionally, when the control signaling sent by the DU does not carry duration indication information, it indicates that the terminal is indicated to deactivate the SPS configuration/skip the SPS resource in a preconfigured period of time. The preconfigured period of time may be preconfigured for the terminal by using RRC signaling.

Optionally, after receiving the control signaling delivered by the DU, the terminal deactivates the SPS configuration/skips the SPS resource in an indicated period of time, and the UE does not perform receiving or corresponding processing (for example, actions such as PDSCH decoding and providing a HARQ feedback) on the corresponding SPS resource, or it may be considered that the SPS resource in the period of time is invalid (invalid). After the period of time ends, the terminal automatically activates the SPS configuration or resumes SPS reception processing.

In a possible implementation of part 1220, after receiving the L1/L2 control signaling, the terminal may start a timer A. When the timer A runs, the terminal deactivates the SPS configuration/skips the SPS resource. When the timer A runs, the terminal may restart the timer A if the control signaling is received again. After the timer A expires, the terminal automatically activates the SPS configuration or resumes SPS reception processing. Optionally, part 1220 may alternatively be implemented by suspending the SPS reception of the terminal through SPS deactivation or SPS group deactivation in a conventional technology.

FIG. 13 is a schematic flowchart of a communication method 1300 according to an embodiment of this application. An execution body of the method is a network device (for example, a core network device, an access network device, a Wi-Fi router, or a Wi-Fi access point). The execution body of the method may be a chip, a chip system, a processor, or the like that supports the network device in implementing the method. The execution body of the method may be a server (for example, a cloud server), or may be a chip, a chip system, a processor, or the like that supports the server in implementing the method. Execution bodies of parts in FIG. 13 may be the same or may be different. The execution body of the method may be a centralized controller, or may be a chip, a chip system, a processor, or the like that supports the centralized controller in implementing the method.

In an implementation of the method 1300, in a handover process between a source station and a target station, the source station may transfer information such as downlink service arrival time and a periodicity of an XR service to the target station, for example, transfer the information by using time sensitive communication assistance information (time sensitive communication assistance information, TSCAI). The target station may configure an SPS configuration and a DRX configuration based on the assistance information. However, before the handover, if large jitter occurs when transmission of a downlink service data packet is performed in a mobile core network or data network due to congestion/queuing, the large jitter also occurs when the downlink service data packet arrives at the target station after the handover. In an appropriate implementation, the target station activates the SPS configuration or validates a DRX configuration after the jitter is eliminated. As shown in FIG. 13, the method 1300 in this embodiment may include a part 1310.

Part 1310: The source station may transfer jitter information of a downlink service data packet arrival moment to the target station by using an Xn interface message. The target station may better configure the DRX configuration or the SPS configuration based on the jitter information.

Optionally, the jitter information may include information indicating whether jitter exists. For example, a parameter jitter_existence may indicate whether jitter exists in the downlink service data packet. For example, when the source station indicates the parameter, it indicates that the jitter exists. When the source station does not indicate the parameter, it indicates that the jitter does not exist. For example, when the source station indicates the parameter and a value is "true", it indicates that the jitter exists. If the value is "false", it indicates that the jitter does not exist.

Optionally, the jitter information may include identification information such as a DRB ID or a QFI corresponding to downlink service data packet in which jitter exists.

Optionally, the jitter information may include jitter range information. For example, the range information may be duration indication information in a unit of a millisecond/a second/a radio frame/a short DRX cycle/a long DRX cycle/an SPS periodicity/a CG periodicity.

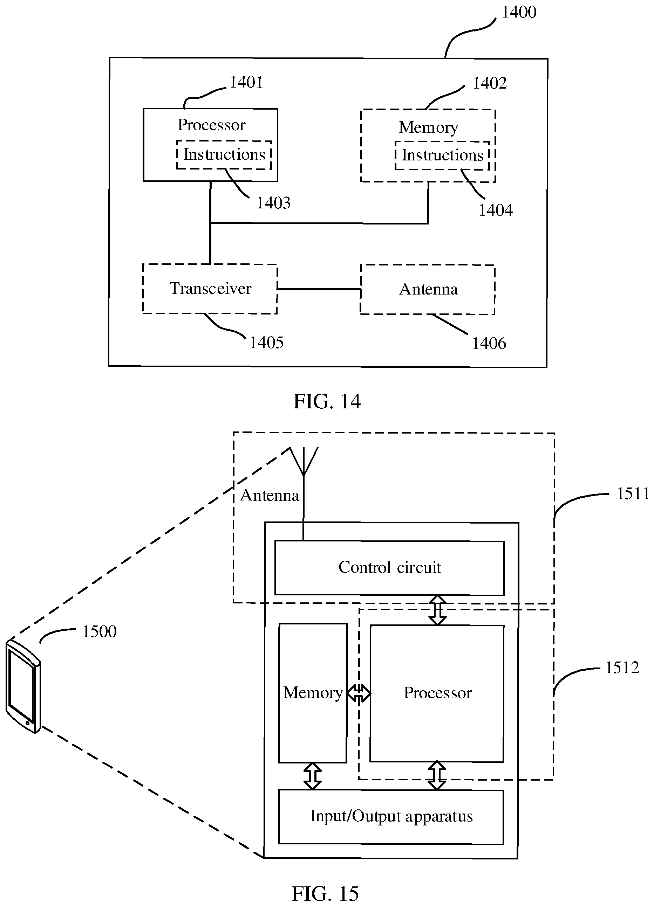

FIG. 14 is a diagram of a structure of an apparatus. The apparatus 1400 may be a network device, a terminal device, a server, or a centralized controller, or may be a chip, a chip system, a processor, or the like that supports the network device, the terminal device, the server, or the centralized controller in implementing the foregoing method. The apparatus may be configured to implement the method described in the foregoing method embodiments. For details, refer to the descriptions in the foregoing method embodiments.

The apparatus 1400 may include one or more processors 1401. The processor 1401 may also be referred to as a processing unit, and may implement a specific control function. The processor 1401 may be a general purpose processor, a special purpose processor, or the like. For example, the processor may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 1401 may alternatively store instructions and/or data 1403, and the instructions and/or data 1403 may be run by the processor, to enable the apparatus 1400 to perform the methods described in the foregoing method embodiments.

In another optional design, the processor 1401 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform transmission or transferring of a signal.

In still another possible design, the apparatus 1400 may include a circuit, and the circuit may implement the sending, receiving, or communication function in the foregoing method embodiments.

Optionally, the apparatus 1400 may include one or more memories 1402. The memory stores instructions 1404, and the instructions may be run on the processor, to enable the apparatus 1400 to perform the methods described in the foregoing method embodiments. Optionally, the memory may further store data. Optionally, the processor may alternatively store instructions and/or data. The processor and the memory may be separately disposed, or may be integrated together. For example, the correspondence described in the foregoing method embodiments may be stored in the memory or stored in the processor.

Optionally, the apparatus 1400 may further include a transceiver 1405 and/or an antenna 1406. The processor 1401 may be referred to as a processing unit, and control the apparatus 1400. The transceiver 1405 may be referred to as a transceiver unit, a transceiver, a transceiver circuit, a transceiver apparatus, a transceiver module, or the like, and is configured to implement a transceiver function.

Optionally, the apparatus 1400 in this embodiment of this application may be configured to perform the methods described in FIG. 7 to FIG. 13 in embodiments of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be the network device or the terminal device. However, a range of the apparatus described in this application is not limited thereto, and a structure of the apparatus may not be limited to FIG. 14. The apparatus may be an independent device or may be a part of a large device. For example, the apparatus may be:
(1) an independent integrated circuit IC, a chip, or a chip system or subsystem;
(2) a set of one or more ICs, where optionally, the IC set may alternatively include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

FIG. 15 is a diagram of a structure of a terminal device. The terminal device is applicable to the scenario shown in FIG. 1, FIG. 4, FIG. 5, or FIG. 6. For ease of description, FIG. 15 shows only main components of the terminal device. As shown in FIG. 15, the terminal device 1500 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The control circuit is mainly configured to perform conversion between a baseband signal and a radio frequency signal, and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user.

After the terminal device is powered on, the processor may read the software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, FIG. 15 shows only one memory and one processor. In an actual terminal device, there may be a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 15. A person skilled in the art may understand that the baseband processor and the central processing unit may be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1511 of the terminal device 1500, and the processor that has a processing function may be considered as a processing unit 1512 of the terminal device 1500. As shown in FIG. 15, the terminal device 1500 includes the transceiver unit 1511 and the processing unit 1512. The transceiver unit may also be referred to as a transceiver, a transceiver machine, a transceiver apparatus, or the like. Optionally, a component that is in the transceiver unit 1511 and that is configured to implement a receiving function may be considered as a receiving unit, and a component that is in the transceiver unit 1511 and that is configured to implement a sending function may be considered as a sending unit. That is, the transceiver unit 1511 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be at one geographical location, or may be distributed at a plurality of geographical locations.

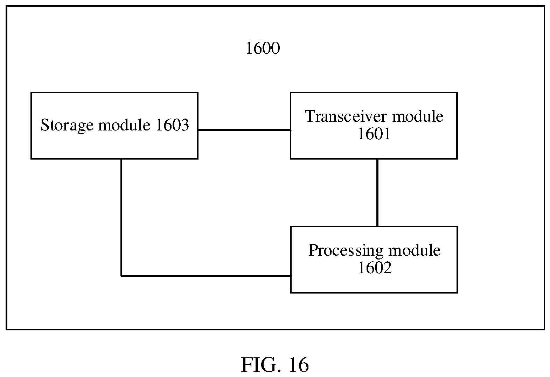

As shown in FIG. 16, another embodiment of this application provides an apparatus 1600. The apparatus may be a terminal, a network device, a server, or a centralized controller, or may be a component (for example, an integrated circuit or a chip) of the terminal, the network device, the server, or the centralized controller. Alternatively, the apparatus may be another communication module, configured to implement the method in the method embodiments of this application. The apparatus 1600 may include a processing module 1602 (or referred to as a processing unit). Optionally, the apparatus 1600 may further include an interface module 1601 (or referred to as a transceiver unit or a transceiver module) and a storage module 1603 (or referred to as a storage unit). The interface module 1601 is configured to implement communication with another device. The interface module 1601 may be, for example, a transceiver module or an input/output module.

In a possible design, one or more modules in FIG. 16 may be implemented by one or more processors, may be implemented by one or more processors and one or more memories, may be implemented by one or more processors and one or more transceivers, or may be implemented by one or more processors, one or more memories, and one or more transceivers. This is not limited in embodiments of this application. The processor, the memory, and the transceiver may be disposed separately, or may be integrated.

The apparatus has a function of implementing the terminal described in embodiments of this application. For example, the apparatus includes a corresponding module, unit, or means (means) used by the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments. Alternatively, the apparatus has a function of implementing the network device described in embodiments of this application. For example, the apparatus includes a corresponding module, unit, or means (means) used by the network device to perform the steps that are related to the network device and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

Optionally, the modules in the apparatus 1600 in this embodiment of this application may be configured to perform the methods described in embodiments of this application.

In a possible design, the apparatus 1600 may include the processing module 1602 and the interface module 1601. The processing module 1602 is adapted to a configure discontinuous reception DRX function based on DRX configuration information. The interface module 1601 is configured to receive first indication information from a network device. The processing module 1602 is further configured to deactivate the DRX function based on the first indication information.

In some possible implementations of the apparatus 1600, the first indication information includes cell indication information and bandwidth part BWP indication information. The cell indication information indicates one or more serving cells or one or more serving cell sets. The BWP indication information indicates one or more BWP indexes. That the processing module 1602 is further configured to deactivate the DRX function based on the first indication information includes:

The processing module 1602 is further configured to deactivate the DRX function on a corresponding BWP in a serving cell or a cell set.

In some possible implementations of the apparatus 1600, the first indication information includes bandwidth part BWP indication information in a cell. That the processing module 1602 is further configured to deactivate the DRX function based on the first indication information includes:
The processing module 1602 is further configured to deactivate the DRX function on a BWP in the cell.

In some possible implementations of the apparatus 1600, the first indication information includes frequency band indication information. The frequency band indication information indicates one or more communication frequency bands. That the processing module 1602 is further configured to deactivate the DRX function based on the first indication information includes:
The processing module 1602 is further configured to deactivate the DRX function on a communication frequency band indicated by the frequency band indication information.

In some possible implementations of the apparatus 1600, the first indication information includes duration indication information. The duration indication information indicates duration of deactivating the DRX function. That the processing module 1602 is further configured to deactivate the DRX function based on the first indication information includes:
The processing module 1602 is further configured to deactivate the DRX function within the duration indicated by the duration indication information, and activate the DRX function beyond the duration indicated by the duration indication information.

In some possible implementations of the apparatus 1600, the method further includes: the interface module 1601 is further configured to receive second indication information from the network device. The processing module 1602 is further configured to activate the DRX function based on the second indication information.

In some possible implementations of the apparatus 1600, the second indication information includes cell indication information and bandwidth part BWP indication information. The cell indication information indicates one or more serving cells or one or more serving cell sets. The BWP indication information indicates one or more BWP indexes. That the processing module 1602 is further configured to activate the DRX function based on the second indication information includes:
The processing module 1602 is further configured to activate the DRX function on a corresponding BWP in a serving cell or a cell set.

In some possible implementations of the apparatus 1600, the second indication information includes bandwidth part BWP indication information in a cell. That the processing module 1602 is further configured to activate the DRX function based on the second indication information includes:
The processing module 1602 is further configured to activate the DRX function on a BWP in the cell.

In some possible implementations of the apparatus 1600, the second indication information includes frequency band indication information. The frequency band indication information indicates one or more communication frequency bands. That the processing module 1602 is further configured to activate the DRX function based on the second indication information includes:
The processing module 1602 is further configured to activate the DRX function on a communication frequency band indicated by the frequency band indication information.

Optionally, the modules in the apparatus 1600 in this embodiment of this application may be configured to perform the methods described in embodiments of this application.

In a possible design, the apparatus 1600 may include the processing module 1602 and the interface module 1601. The interface module 1601 is configured to send discontinuous reception DRX configuration information to a terminal. The processing module 1602 is configured to generate first indication information. The interface module 1601 is further configured to send the first indication information to the terminal, where the first indication information indicates to deactivate a DRX function.

In some possible implementations of the apparatus 1600, the first indication information includes cell indication information and bandwidth part BWP indication information. The cell indication information indicates one or more serving cells or one or more serving cell sets. The BWP indication information indicates one or more BWP indexes.

In some possible implementations of the apparatus 1600, the first indication information includes bandwidth part BWP indication information in a cell. The BWP indication information in the cell indicates one or more BWP indexes.

In some possible implementations of the apparatus 1600, the first indication information includes frequency band indication information. The frequency band indication information indicates one or more communication frequency bands.

In some possible implementations of the apparatus 1600, the first indication information includes duration indication information. The duration indication information indicates duration of deactivating the DRX function.

In some possible implementations of the apparatus 1600, the method further includes: the interface module 1601 is further configured to send second indication information to the terminal, where the second indication information indicates to activate the DRX function.

In some possible implementations of the apparatus 1600, the second indication information includes cell indication information and bandwidth part BWP indication information. The cell indication information indicates one or more serving cells or one or more serving cell sets. The BWP indication information indicates one or more BWP indexes.

In some possible implementations of the apparatus 1600, the second indication information includes bandwidth part BWP indication information in a cell. The BWP indication information in the cell indicates one or more BWP indexes.

In some possible implementations of the apparatus 1600, the second indication information includes frequency band indication information. The frequency band indication information indicates one or more communication frequency bands.

In some possible implementations of the apparatus 1600, the apparatus 1600 includes a CU and a DU. That the interface module 1601 is further configured to send the first indication information to the terminal includes:
The CU transfers content of the first indication information to the DU, and the DU sends the first indication information to the terminal.

In some possible implementations of the apparatus 1600, the apparatus 1600 includes a CU and a DU. That the interface module 1601 is further configured to send the second indication information to the terminal includes:
The CU transfers content of the second indication information to the DU, and the DU sends the second indication information to the terminal.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the scope of embodiments of this application.

It may be understood that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, the technologies may be implemented by hardware, software, or a combination thereof. For hardware implementation, a processing unit configured to perform these technologies at a communication apparatus (for example, a base station, a terminal, a network entity, or a chip) may be implemented in one or more general purpose processors, a DSP, a digital signal processing device, an ASIC, a programmable logic device, an FPGA or another programmable logic apparatus, a discrete gate or transistor logic, a discrete hardware component, or any combination thereof. The general purpose processor may be a microprocessor. Optionally, the general purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium. The computer-readable medium stores a computer program, and when the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when", "if", and "in case of" all mean that an apparatus performs corresponding processing in an objective case, are not intended to limit time, does not need the apparatus to necessarily have a determining action during implementation, and do not mean that there is another limitation.

"Simultaneously" in this application may be understood as being at a same time point, may be understood as being within a time period, or may be understood as being within a same periodicity.

A person skilled in the art may understand that various numbers such as first and second in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as first and second in this application are also merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural. The character "/" generally indicates an "or" relationship between the associated objects.

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It may be understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The correspondences shown in the tables in this application may be configured, or may be predefined. Values of information in the tables are merely examples, and other values may be configured. This is not limited in this application. When a correspondence between configuration information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, for example, an array, a queue, a container, a stack, a linear table, a pointer, a linked list, a tree, a graph, a structure, a class, a pile, or a hash table, may alternatively be used.

Predefine in this application may be understood as define, predefine, store, pre-store, pre-negotiate, preconfigure, solidify, or pre-burn.

A person of ordinary skill in the art may understand that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method is applied to a terminal, and the method comprises:
configuring a discontinuous reception DRX function based on DRX configuration information;
receiving first indication information from a network device; and
deactivating the DRX function based on the first indication information.

2. The method according to claim 1, wherein the first indication information comprises cell indication information and bandwidth part BWP indication information; the cell indication information indicates one or more serving cells or one or more serving cell sets; the BWP indication information indicates one or more BWP indexes; and the deactivating the DRX function based on the first indication information comprises:
deactivating the DRX function on a corresponding BWP in a serving cell or a cell set.

3. The method according to claim 1, wherein the first indication information comprises bandwidth part BWP indication information in a cell, and the deactivating the DRX function based on the first indication information comprises:
deactivating the DRX function on a BWP in the cell.

4. The method according to any one of claims 1 to 3, wherein the first indication information comprises frequency band indication information, and the frequency band indication information indicates one or more communication frequency bands; and the deactivating the DRX function based on the first indication information comprises:
deactivating the DRX function on a communication frequency band indicated by the frequency band indication information.

5. The method according to any one of claims 1 to 4, wherein the first indication information comprises duration indication information, and the duration indication information indicates duration of deactivating the DRX function; and the deactivating the DRX function based on the first indication information comprises:
deactivating the DRX function within the duration indicated by the duration indication information, and activating the DRX function beyond the duration indicated by the duration indication information.

6. The method according to any one of claims 1 to 4, wherein the method further comprises:
receiving second indication information from the network device; and
activating the DRX function based on the second indication information.

7. The method according to claim 6, wherein the second indication information comprises cell indication information and bandwidth part BWP indication information; the cell indication information indicates one or more serving cells or one or more serving cell sets; the BWP indication information indicates one or more BWP indexes; and the activating the DRX function based on the second indication information comprises:
activating the DRX function on a corresponding BWP in a serving cell or a cell set.

8. The method according to claim 7, wherein the second indication information comprises bandwidth part BWP indication information in a cell; and the activating the DRX function based on the second indication information comprises:
activating the DRX function on a BWP in the cell.

9. The method according to claim 6 or 7, wherein the second indication information comprises frequency band indication information, and the frequency band indication information indicates one or more communication frequency bands; and the activating the DRX function based on the second indication information comprises:
activating the DRX function on a communication frequency band indicated by the frequency band indication information.

10. A communication method, wherein the method is applied to a network device, and the method comprises:
sending discontinuous reception DRX configuration information to a terminal; and
sending first indication information to the terminal, wherein the first indication information indicates to deactivate a DRX function.

11. The method according to claim 10, wherein the first indication information comprises cell indication information and bandwidth part BWP indication information; the cell indication information indicates one or more serving cells or one or more serving cell sets; and the BWP indication information indicates one or more BWP indexes.

12. The method according to claim 10, wherein the first indication information comprises bandwidth part BWP indication information in a cell; and the BWP indication information in the cell indicates one or more BWP indexes.

13. The method according to any one of claims 10 to 12, wherein the first indication information comprises frequency band indication information, and the frequency band indication information indicates one or more communication frequency bands.

14. The method according to any one of claims 10 to 13, wherein the first indication information comprises duration indication information, and the duration indication information indicates duration of deactivating the DRX function.

15. The method according to any one of claims 10 to 14, wherein the method further comprises:
sending second indication information to the terminal, wherein the second indication information indicates to activate the DRX function.

16. The method according to claim 15, wherein the second indication information comprises cell indication information and bandwidth part BWP indication information; the cell indication information indicates one or more serving cells or one or more serving cell sets; and the BWP indication information indicates one or more BWP indexes.

17. The method according to claim 15, wherein the second indication information comprises bandwidth part BWP indication information in a cell; and the BWP indication information in the cell indicates one or more BWP indexes.

18. The method according to claim 16 or 17, wherein the second indication information comprises frequency band indication information, and the frequency band indication information indicates one or more communication frequency bands.

19. The method according to claim 10, wherein the network device comprises a CU and a DU, and the sending first indication information to the terminal comprises:
transferring, by the CU, content of the first indication information to the DU, and sending, by the DU, the first indication information to the terminal.

20. The method according to claim 15, wherein the network device comprises a CU and a DU, and the sending second indication information to the terminal comprises:
transferring, by the CU, content of the second indication information to the DU, and sending, by the DU, the second indication information to the terminal.

21. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

22. A communication apparatus, comprising a processor, wherein the processor is coupled to a memory, the memory is configured to store a program or instructions, and when the program or the instructions are executed by the processor, the apparatus is enabled to perform the method according to any one of claims 10 to 20.

23. A computer-readable storage medium, wherein the computer-readable storage medium stores a computer program or instructions, and when the computer program or the instructions are executed, a computer is enabled to perform the method according to any one of claims 1 to 9 or claims 10 to 20.

24. A computer program product comprising instructions, wherein when the computer program product runs on a computing device, the computing device is enabled to perform the method according to any one of claims 1 to 9 or claims 10 to 20.

25. A communication system, comprising the apparatus according to claim 21 and the apparatus according to claim 22.
